# EUROPEAN PATENT APPLICATION

(11) **EP 4 607 973 A1**
(43) Date of publication of application: **27.08.2025**
(21) Application number: 22962422.6
(22) Date of filing: 20.10.2022
(51) Int. Cl.: H04W 4/06

(54) **COMMUNICATION METHOD AND APPARATUS, ELECTRICAL DEVICE, AND STORAGE MEDIUM**

(71) Applicant: Beijing Xiaomi Mobile Software Co., Ltd., Beijing 100085 (CN)
(72) Inventor: WU, Jinhua, Beijing 100085 (CN)
(74) Representative: Dehns Germany Partnerschaft mbB
(86) International application number: PCT/CN2022/126530
(87) International publication number: WO 2024/082235

(57) **Abstract**

The present disclosure provides a communication method and apparatus, an electronic device, and a storage medium. A terminal accesses a core network device by means of a trustednon-3GPP method, and forwards a PDU session modification request to a core network device by means of a trusted non-3GPP access net-work device, allowing the core network device to determine, according to the PDU session modification request, whether to allow the terminal to join an MBS session, allowing the core network device to provide multicast and broadcast services to the terminal which gained access via the non-3GPP method.

## Description

### TECHNICAL FIELD

The disclosure relates to the field of communication technology, and in particular to a communication method, a communication apparatus, an electronic device, and a storage medium.

### BACKGROUND

In related technologies, multicast and broadcast services in a 5G communication system may only support a terminal accessing a core network in a 3rd generation partnership project (3GPP) mode. However, with the development of non-3GPP access networks, how to make the multicast and broadcast services of the 5G communication system capable of supporting the terminal in a non-3GPP access mode remains an unsolved issue.

### SUMMARY

In order to overcome problems in the related art, the disclosure provides a communication method, a communication apparatus, an electronic device, and a storage medium.

According to a first aspect of embodiments of the disclosure, a communication method is provided. The method is applied to a core network device, including: receiving a packet data unit (PDU) session modification request from an access network device, in which the PDU session modification request includes a multicast and broadcast service (MBS) session identification (ID), the MBS session ID represents an MBS session that a terminal requests to join; and determining whether to accept the terminal to join the MBS session; in which the access network device is a trusted non-3rd generation partnership project (3GPP) access network device and the terminal communicates with the core network device in a non-3GPP mode via the trusted non-3GPP access network device.

According to a second aspect of embodiments of the disclosure, a communication method is provided. The method is applied to a terminal. The terminal communicates with a core network device via an access network device in a non-3GPP mode, and the access network device is a trusted non-3GPP access network device.

The method includes: sending a PDU session modification request to the access network device, in which the access network device is configured to send the PDU session modification request to the core network device; the PDU session modification request includes an MBS session ID, the MBS session ID represents an MBS session that the terminal requests to join, and the PDU session modification request is used for the core network device to determine whether to accept the terminal to join the MBS session.

According to a third aspect of embodiments of the disclosure, a communication method is provided. The method is applied to an application function network element in a core network device. The method includes: sending a first request message to a first network element, in which the first request message includes at least one temporary mobile group identity (TMGI) and at least one MBS service area to be identified, and the at least one MBS service area to be identified includes an MBS service area corresponding to an access network device.

The first network element is a network exposure function network element, an MBS function network element, or a network element integrating the network exposure function network element and the MBS function network element; the access network device is a trusted non-3rd generation partnership project (3GPP) access network device and a terminal communicates with the core network device in a non-3GPP mode via the trusted non-3GPP access network device; and the first request message is used for the first network element to allocate the at least one TMGI to the at least one MBS service area to be identified based on the first request message to create at least one MBS session.

According to a fourth aspect of embodiments of the disclosure, a communication method is provided. The method is applied to a first network element in a core network device. The first network element is a network exposure function network element, an MBS function network element, or a network element integrating the network exposure function network element and the MBS function network element.

The method includes: receiving a first request message from an application function network element, in which the first request message includes at least one TMGI and at least one MBS service area to be identified, and the at least one MBS service area to be identified includes an MBS service area corresponding to an access network device, in which the access network device is a trusted non-3GPP access network device and a terminal communicates with the core network device in a non-3GPP mode via the trusted non-3GPP access network device; and allocating the at least one TMGI to the at least one MBS service area to be identified based on the first request message to create at least one MBS session.

According to a fifth aspect of embodiments of the disclosure, a communication apparatus is provided. The apparatus is applied to a core network device. The apparatus includes a first receiving module, configured to receive a PDU session modification request from an access network device, in which the PDU session modification request includes an MBS session ID, the MBS session ID represents an MBS session that a terminal requests to join; and a determining module, configured to determine whether to accept the terminal to join the MBS session; in which the access network device is a trusted non-3GPP access network device and the terminal communicates with the core network device in a non-3GPP mode via the trusted non-3GPP access network device.

According to a sixth aspect of embodiments of the disclosure, a communication apparatus is provided. The apparatus is applied to a terminal. The terminal communicates with a core network device via an access network device in a non-3GPP mode, and the access network device is a trusted non-3GPP access network device. The apparatus includes: a second sending module, configured to send a PDU session modification request to the access network device, in which the access network device is configured to send the PDU session modification request to the core network device; the PDU session modification request includes an MBS session ID, the MBS session ID represents an MBS session that the terminal requests to join, and the PDU session modification request is used for the core network device to determine whether to accept the terminal to join the MBS session.

According to a seventh aspect of embodiments of the disclosure, a communication apparatus is provided. The apparatus is applied to an application function network element in a core network device.

The apparatus includes a third sending module, configured to send a first request message to a first network element, in which the first request message includes at least one TMGI and at least one MBS service area to be identified, and the at least one MBS service area to be identified includes an MBS service area corresponding to an access network device; the first network element is a network exposure function network element, an MBS function network element, or a network element integrating the network exposure function network element and the MBS function network element; the access network device is a trusted non-3GPP access network device and a terminal communicates with the core network device in a non-3GPP mode via the trusted non-3GPP access network device; and the first request message is used for the first network element to allocate the at least one TMGI to the at least one MBS service area to be identified based on the first request message to create at least one MBS session.

According to an eighth aspect of embodiments of the disclosure, a communication apparatus is provided. The apparatus is applied to a first network element in a core network device. The first network element is a network exposure function network element, an MBS function network element, or a network element integrating the network exposure function network element and the MBS function network element.

The apparatus includes a third receiving module, configured to receive a first request message from an application function network element, in which the first request message includes at least one TMGI and at least one MBS service area to be identified, and the at least one MBS service area to be identified includes an MBS service area corresponding to an access network device, in which the access network device is a trusted non-3GPP access network device and a terminal communicates with the core network device in a non-3GPP mode via the trusted non-3GPP access network device; and a creating module, configured to allocate the at least one TMGI to the at least one MBS service area to be identified based on the first request message to create at least one MBS session.

According to a ninth aspect of embodiments of the disclosure, an electronic device is provided. The electronic device includes a processor; a memory storing instructions executable by the processor; in which the processor is configured to perform steps of any method according to the first aspect, or steps of any method according to the second aspect, or steps of any method according to the third aspect, or steps of any method according to the fourth aspect.

According to a tenth aspect of embodiments of the disclosure, a computer-readable storage medium is provided. The computer storage medium stores computer program instructions which, when executed by a processor, steps of any method according to the first aspect, or steps of any method according to the second aspect, or steps of any method according to the third aspect, or steps of any method according to the fourth aspect are implemented.

In the technical solutions provided in the embodiments of the disclosure, the terminal accesses the core network device in the trusted non-3GPP mode, and forwards the PDU session modification request to the core network device via the trusted non-3GPP access network device, so that the core network device can determine whether to accept the terminal to join the MBS session based on the PDU session modification request, and the core network device can provide the MBS to the terminal accessed in the non-3GPP mode.

It should be understood that the above general description and the following detailed description are only exemplary and explanatory, and do not limit embodiments of the disclosure.

### BRIEF DESCRIPTION OF THE DRAWINGS

The above-mentioned and/or additional aspects and advantages of the disclosure will become apparent and readily appreciated from the following description of embodiments, taken in combination with the accompanying figures.
FIG. 1 is a schematic diagram illustrating a communication architecture applicable to an embodiment of the disclosure.
FIG. 2 is a flow chart illustrating a communication method according to an embodiment.
FIG. 3 is a flow chart illustrating a communication method according to an embodiment.
FIG. 4 is a flow chart illustrating a communication method according to an embodiment.
FIG. 5 is a flow chart illustrating a communication method according to an embodiment.
FIG. 6 is a flow chart illustrating a communication method according to an embodiment.
FIG. 7 is a flow chart illustrating a communication method according to an embodiment.
FIG. 8 is a flow chart illustrating a communication method according to an embodiment.
FIG. 9 is a flow chart illustrating a communication method according to an embodiment.
FIG. 10 is a flow chart illustrating a communication method according to an embodiment.
FIG. 11 is a flow chart illustrating a communication method according to an embodiment.
FIG. 12 is a flow chart illustrating a communication method according to an embodiment.
FIG. 13 is a flow chart illustrating a communication method according to an embodiment.
FIG. 14 is a flow chart illustrating a communication method according to an embodiment.
FIG. 15 is a flow chart illustrating a communication method according to an embodiment.
FIG. 16 is a flow chart illustrating a communication method according to an embodiment.
FIG. 17 is a flow chart illustrating a communication method according to an embodiment.
FIG. 18 is a flow chart illustrating a communication method according to an embodiment.
FIG. 19 is a flow chart illustrating a communication method according to an embodiment.
FIG. 20 is a flow chart illustrating a communication method according to an embodiment.
FIG. 21 is a schematic diagram illustrating an interaction of a communication method according to an embodiment.
FIG. 22 is a block diagram illustrating a communication apparatus according to an embodiment.
FIG. 23 is a block diagram illustrating a communication apparatus according to an embodiment.
FIG. 24 is a block diagram illustrating a communication apparatus according to an embodiment.
FIG. 25 is a block diagram illustrating a communication apparatus according to an embodiment.
FIG. 26 is a block diagram illustrating a communication apparatus according to an embodiment.
FIG. 27 is a block diagram illustrating an electronic device according to an embodiment.
FIG. 28 is a block diagram illustrating an electronic device according to an embodiment.

### DETAILED DESCRIPTION

Reference will now be made in detail to the exemplary embodiments, examples of which are illustrated in the accompanying drawings. When the following description refers to the accompanying drawings, the same numerals in different drawings refer to the same or similar elements unless otherwise indicated. The implementations described in the following exemplary embodiments do not represent all implementations consistent with the embodiments of the disclosure. Rather, they are merely examples of devices and methods consistent with aspects of the embodiments of the disclosure as recited in the appended claims.

Other implementations of the embodiments of the disclosure will be readily apparent to those skilled in the art from consideration of the specification and practice of the disclosure disclosed herein. This application is intended to cover any modification, use or adaptation of the embodiments of the disclosure, these modifications, uses or adaptations follow the general principles of the embodiments of the disclosure and include those in the technical field not disclosed by the embodiments of the disclosure Common knowledge or common technical means. The specification and examples are to be considered exemplary only, with a true scope and spirit of the embodiments of the disclosure being indicated by the following claims.

It should be understood that the embodiments of the disclosure are not limited to the precise structures described above and shown in the drawings, and various modifications and changes can be made without departing from the scope thereof. The scope of embodiments of the disclosure is limited only by the appended claims.

In order to solve problems in the related art, the disclosure provides a communication method, a communication apparatus, an electronic device, and a storage medium.

The embodiments of the disclosure may be applied to a 4th-generation (4G) evolved system, such as a long term evolution (LTE) system, or may be applied to a 5th-generation (5G) system, such as an access network adopting new radio access technology (RAT) or a cloud radio access network (CRAN).

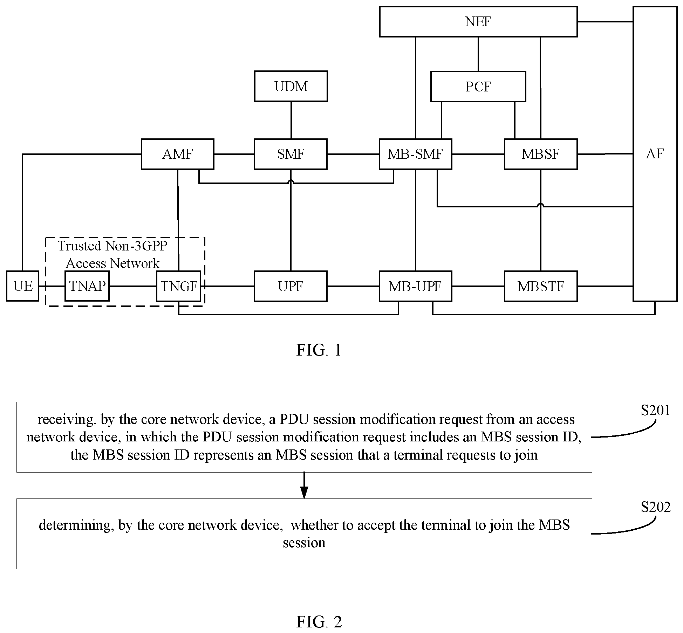

FIG. 1 is a schematic diagram illustrating a communication architecture applicable to an embodiment of the disclosure. It should be understood that the embodiments are not limited to the system shown in FIG. 1. In addition, the apparatus in FIG. 1 may be a hardware, a software divided by functionality, or a combination of the above.

Now refer to the communication architecture shown in FIG. 1.

AMF (access and mobility management function) may be an access and mobility management network element in the 5G. The mobility management network element is responsible for access and mobility management of terminals in a mobile network. The AMF is responsible for access and mobility management of terminals, non-access stratum (NAS) message routing, and session management function (SMF) selection, etc. The AMF may act as an intermediate network element to transmit a session management message between the terminal and the SMF.

The SMF may be a session management network element in the 5G architecture. The SMF is responsible for path forwarding management, including delivering a packet forwarding policy to user plane network elements and instructing the user plane network elements to process and forward packets based on the packet forwarding policy. The session management network element may be responsible for session management (e.g., session creation/modification/deletion), user plane network element selection, and allocation and management of user plane tunnel information.

UPF (user plane function) may be a user plane functional entity in the 5G architecture. The UPF is responsible for packet processing and forwarding.

UDM (unified data management) may be a data management network element responsible for terminal identification processing, access authentication, registration, and mobility management. In the 5G communication system, the data management network element may be a UDM network element.

As shown in FIG. 1, the communication architecture provided in the embodiments of the disclosure may further include a policy control function (PCF). In other embodiments, the PCF may also be a policy and charging control function (PCRF). The PCF or the PCRF is responsible for policy control decision and flow-based charging control.

In addition, the communication architecture in FIG. 1 includes network elements such as a multicast/broadcast session management function (MB-SMF), a multicast/broadcast user plane function (MB-UPF), a multicast/broadcast service transport function (MBSTF), a network exposure function (NEF), a multicast/broadcast service function (MBSF), and an application function (AF). The network elements, along with the AMF, the UPF, the SMF, and the UDM, may be collectively referred to as core network devices. The core network devices support accessing of terminals via a 3rd generation partnership project (3GPP) access network (e.g., gNB, eNB) or via a non-3GPP access network (e.g., WiFi, satellite). The non-3GPP access network may access the 5G network through a non-3gpp interworking function (N3IWF), which interfaces with the 5G network via an N2 interface and an N3 interface.

The MB-SMF is a multicast/broadcast session management function network element, and the primary function is to implement session management for multicast and broadcast services. The MB-UPF is a multicast/broadcast user plane function network element, and the primary function is to implement user plane packet forwarding for multicast and broadcast services. The MBSTF is a multicast/broadcast service transport function network element, and the primary function is to act as an anchor point for multimedia and broadcast service (MBS) data traffic, enable general packet transport functions, and support IP multicast applications such as frame handling, multi-streaming, and forward error correction (FEC) for data packets. The NEF is a network exposure function network element located between the 5G core network and external third-party application functions (AFs), potentially including some internal AFs. The NEF is responsible for managing exposure of network data to external entities. All external applications requires access to internal data of the 5G core network through the NEF. The NEF provides security mechanisms to ensure secure communication between external applications and the 3GPP network, exposure of customization capabilities for external application quality of service (QoS), mobility status event subscription, and AF request delivering. The MBSF is a multicast/broadcast service function network element, and the primary function is to support the MBS, including controlling the MBSTF and determining transmission parameters. The AF is an application function network element. The AF operates similarly to an application server, interacts with other 5G core network control plane network functions (NFs), and provides service functionalities. The AF may exist for different application services and may be owned by operators or trusted third parties. Optionally, the AF network element may also be an application server (AS) network element.

In some embodiments, the system architecture may further include a network storage network element, configured to maintain real-time information of all network function services in the network. In the 5G communication system, the network storage network element may be a network repository function (NRF) network element. The NRF network element stores information about a plurality of network elements, such as SMF information, UPF information, and AMF information. The network elements like AMF, SMF, and UPF may connect to the NRF to register their own information to the NRF on one hand and retrieve information about other registered network elements from the NRF on the other hand. Other network elements (e.g., AMF) may request the NRF to acquire available network elements based on parameters such as network element type, data network identifier, or unknown area information. If a domain name system (DNS) server is integrated into the NRF, selection function network elements (e.g., AMF) may query the NRF to acquire other network elements (e.g., SMF) for selection.

As shown in FIG. 1, the communication architecture also includes a trusted non-3gpp access network (TNAN), which includes a trusted non-3gpp access point (TNAP), configured to provide wireless access to the terminal. The TNAN includes a trusted non-3gpp access gateway function (also called satellite access gateway function, TNFG). The TNAP and the TNFG are collectively referred to as access network devices.

Referring to FIG. 1, the communication architecture further includes a user equipment (UE), which may also be referred to as a terminal, or an access terminal, a user unit, a subscriber station, a mobile station, a mobile station, a remote station, a remote terminal, a mobile device, a user terminal, a wireless communication device, a user agent, or a user device, and so on. The terminal has at least a non-3GPP access capability and a non-access stratum (NAS) capability. The terminal may be a cellular phone, a cordless phone, a session initiation protocol (SIP) phone, a wireless local loop (WLL) station, a personal digital assistant (PDA), a handheld device with wireless communication capabilities, a computing device or other processing device connected to a wireless modem, an in-vehicle device, a wearable device, an IoT terminal device such as a fire detection sensor, a smart water/electricity meter, a factory monitoring device, and so on. The terminal may be registered to the 5G core network by connecting to the TNAN.

Based on the communication architecture in FIG. 1, the terminal may access the 5G system via the TNAN. The 5G system may provide the multicast and broadcast service to the terminal accessing to the 5G core network via the non-3GPP mode.

It may be understood that the above functions may be either a network component in a hardware device, a software function running on dedicated hardware, or a virtualization function instantiated on a platform (e.g., a cloud platform).

FIG. 2 is a flow chart illustrating a communication method according to an embodiment. The method is applied to a core network device. As shown in FIG. 2, the method includes following steps S201 to S202.

At step S201, the core network device receives a packet data unit (PDU) session modification request from an access network device, in which the PDU session modification request includes a multicast and broadcast service (MBS) session identification (ID), the MBS session ID represents an MBS session that a terminal requests to join.

At step S202, the core network device determines whether to accept the terminal to join the MBS session.

The access network device is a trusted non-3rd generation partnership project (3GPP) access network device and the terminal communicates with the core network device in a non-3GPP mode via the trusted non-3GPP access network device.

In particular, the PDU session modification request may be sent by the terminal via an uplink non access stratum (NAS) message, and forwarded to the core network device via the access network device. The PDU session modification request may include one or more MBS session IDs, and the disclosure does not limit the number of MBS session IDs.

In an embodiment, before the step S201 is performed, the core network device may send a first request message to a first network element via an application function network element. The first request message includes at least one temporary mobile group identity (TMGI) and at least one MBS service area to be identified. The at least one MBS service area to be identified includes an MBS service area corresponding to the access network device. The first network element allocates the at least one TMGI to each MBS service area to be identified based on the first request message to create at least one MBS session. The first network element is a network exposure function network element, an MBS function network element, or a network element integrating the network exposure function network element and the MBS function network element.

It may be understood that the MBS service area to be identified may include an MBS service area corresponding to the 3GPP access network, and/or an MBS service area corresponding to the non-3GPP access network.

In an embodiment, after creating the MBS session, the core network device may send one or more MBS session IDs of the created one or more MBS sessions to the terminal. The terminal may determine information related to each MBS session based on the MBS session ID, and thus determine whether to join the one or more MBS sessions created by the core network device based on the MBS session information.

In an embodiment, the MBS session ID may include at least one of: the TMGI, a synchronization status message (SSM), MBS service area information, session description information, or access type information. In some optional embodiments, the access type information may also be radio access technology (RAT) type information.

For example, the MBS session ID may include the access type information or the RAT type information. The access type information or the RAT type information may represent a trusted non-3GPP access mode.

In another embodiment, the MBS service area information includes at least one of: a cell ID, a tracking area indicator (TAI) list, geographical area information, civic address information, or area information, in which the area information is recognizable by the access network device and mappable to an area covered by a non-3GPP access point. The area information may be an area information ID corresponding to the area information.

It may be understood that the cell ID, the TAI list, the geographical area information, the civic address information, and the area information may all be recognized as a certain geographical area by the access network device or the terminal. The MBS service area information may be represented by the cell ID, the TAI list, the geographical area information, the civic address information, or the area information. For example, the MBS session may be uniquely identified by an address or an area corresponding to the cell ID.

An amount of data corresponding to the cell ID, or the TAI list, or the area information ID is less than an amount of data corresponding to the geographic area information and/or the civic address information.

In a case that the MBS service area information includes an MBS service area corresponding to the non-3GPP access network, the MBS service area information may include the area information. The area information represents an area covered by the non-3GPP access network.

In another embodiment, in a case that any MBS session ID includes the MBS service area information and the MBS service area information includes the geographical area information and/or the civic address information, the geographical area information and/or the civic address information is translated into the cell ID, the TAI list, or the area information ID via the first network element.

That is, after translating the geographical area information and/or the civic address information into the cell ID, the TAI list, or the area information ID via the first network element, the translated MBS service area information may be sent to the terminal to reduce the amount of data transmitted.

In some possible implementations, step S202 may be performed by an SMF network element in the core network device. The SMF network element may determine whether to accept the terminal to join the MBS session based on MBS subscription data received from a UDM network element and/or based on a terminal indication received from an MB-SMF network element. If the MBS session that the terminal requests to join is not enabled, the SMF may accept the terminal to join the MBS session and indicate an enabled time to the terminal, or the SMF may refuse the terminal to join the MBS session. If the MBS session that the terminal requests to join is inactive, the SMF may accept the terminal to join the MBS session.

In some optional embodiments, in the case that the SMF accepts the terminal to join the MBS session, the SMF may respond by sending N2 SM information to the access network device. The N2 SM information may include one or more of: a PDU session ID, an MBS session ID, updated PDU session information, and mapping information between a unicast QoS flow and a multicast QoS flow. If the MBS session does not exist in the trusted non-3GPP access network, the SMF may create an MBS session context for the MBS session in the trusted non-3GPP access network. And the SMF may inform the trusted non-3GPP access network of a relationship between a multicast MBS session context and a PDU session context of the terminal based on the MBS session ID and the mapping information between the unicast QoS flow and the multicast QoS flow. In the case that the SMF does not accept the terminal to join the MBS session, a PDU session modification rejection message may be forwarded to the terminal via the access network device.

In an embodiment, the trusted non-3GPP access network device includes a TNAP, and the TNAP is provided by a trusted non-3GPP satellite or a wireless router.

It should be noted that the wireless router may be any device that provides a wireless access point for a wireless local area network, such as a wireless gateway, a wireless bridge, and etc.

In addition, a satellite, as a specific implementation of the trusted non-3GPP access network, may be used as a TNAP to provide wireless access services for the terminal. Accordingly, in the case that the TNAP is provided by the trusted non-3GPP satellite, the trusted non-3GPP access device may also include a satellite access gateway function (S-AGF). The S-AGF is equivalent to a trusted non-3GPP access gateway function (TNGF) in the trusted non-3GPP access network. The satellite may be used as the TNAP which communicates with a Ta interface of the S-AGF. The S-AGF may communicate with the AMF via an N2 interface. This N2 interface may be an enhanced N2 interface so that the S-AGF and the AMF may communicate reliably.

In embodiments of the disclosure, the terminal accesses the core network device in the trusted non-3GPP mode, and forwards the PDU session modification request to the core network device via the trusted non-3GPP access network device, so that the core network device can determine whether to accept the terminal to join the MBS session based on the PDU session modification request, and the core network device can provide the MBS to the terminal accessed in the non-3GPP mode.

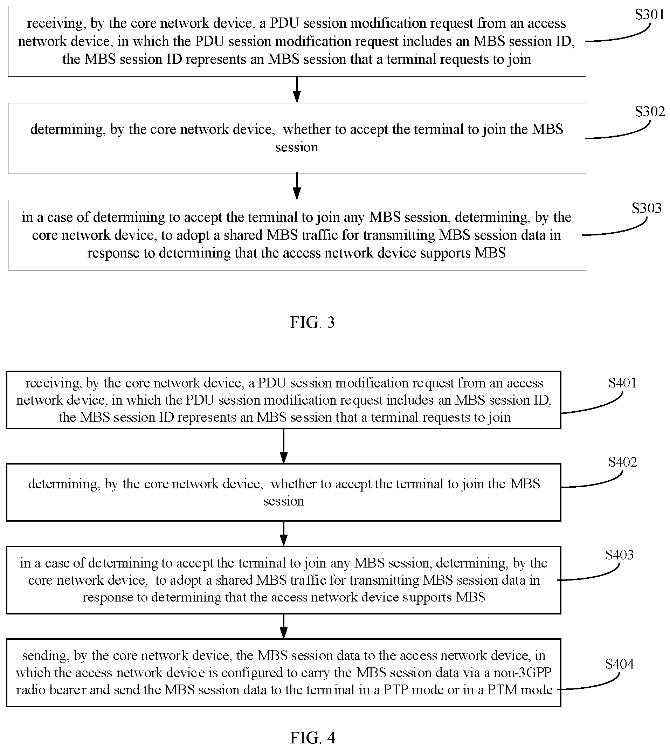

FIG. 3 is a flow chart illustrating a communication method according to an embodiment. The method is applied to a core network device. As shown in FIG. 3, the method includes the following steps S301 to S303.

At step S301, the core network device receives a PDU session modification request from an access network device, in which the PDU session modification request includes an MBS session ID, the MBS session ID represents an MBS session that a terminal requests to join.

At step S302, the core network device determines whether to accept the terminal to join the MBS session.

The access network device is a trusted non-3GPP access network device and the terminal communicates with the core network device in a non-3GPP mode via the trusted non-3GPP access network device.

At step S303, in a case of determining to accept the terminal to join any MBS session, the core network device determines to adopt a shared MBS traffic for transmitting MBS session data in response to determining that the access network device supports MBS.

The access network device is a trusted non-3GPP access network device and the terminal communicates with the core network device in a non-3GPP mode via the trusted non-3GPP access network device.

In an embodiment, the trusted non-3GPP access network device includes a TNAP, and the TNAP is provided by a trusted non-3GPP satellite or a wireless router.

In particular, the PDU session modification request may be sent by the terminal via an uplink NAS message, and forwarded to the core network device via the access network device. The PDU session modification request may include one or more MBS session IDs, and the disclosure does not limit the number of MBS session IDs.

In some possible implementations, step S302 may be performed by an SMF network element in the core network device. The SMF network element may determine whether to accept the terminal to join the MBS session based on MBS subscription data received from a UDM network element and/or based on a terminal indication received from an MB-SMF network element. If the MBS session that the terminal requests to join is not enabled, the SMF may accept the terminal to join the MBS session and indicate an enabled time to the terminal, or the SMF may refuse the terminal to join the MBS session. If the MBS session that the terminal requests to join is inactive, the SMF may accept the terminal to join the MBS session.

In some optional embodiments, in the case that the SMF accepts the terminal to join the MBS session, the SMF may send an N2 information request to the access network device. The N2 information request may include one or more of: a PDU session ID, an MBS session ID, updated PDU session information, and mapping information between a unicast QoS flow and a multicast QoS flow. If the MBS session does not exist in the trusted non-3GPP access network, the SMF may create an MBS session context for the MBS session in the trusted non-3GPP access network. And the SMF may inform the trusted non-3GPP access network of a relationship between a multicast MBS session context and a PDU session context of the terminal based on the MBS session ID and the mapping information between the unicast QoS flow and the multicast QoS flow.

In an embodiment, a non-3GPP radio bearer is configured by the access network device for the MBS session based on a first signaling in response to determining that the access network device supports the MBS and determining that the MBS session joined by the terminal is active; and the first signaling includes a PDU session modification command, obtained by exchanging between the access network device and the terminal.

In particular, the access network device may configure radio resources for the MBS session in response to the MBS session being active. In the case that the access network device determines to support the MBS, the access network device may exchange the first signaling with the terminal. The first signaling is used for the access network device to configure, for the terminal, non-3GPP radio resources for a multicast or broadcast MBS session based on the first signaling. The first signaling includes a PDU session modification command. In a possible implementation, if the access network device does not support the MBS, the access network device may reconfigure the radio resources for unicast transmission of the MBS session data via an associated PDU session.

In an optional embodiment, the access network device may send a PDU session modification response to the core network device. The PDU session modification response may be carried by an N2 information response. The PDU session modification response may indicate to the core network device whether the access network device supports the MBS or not. In the case that the access network device does not support the MBS, a unicast QoS flow received by the access network device may be indicated to the core network device.

In an embodiment, adopting the shared MBS traffic for transmitting the MBS session data may include: sending, by an MB-UPF, a multicast PDU to the access network device via an N3mb interface corresponding to the MBS session, so that all the terminals joining the MBS session via the access network device share the interface for receiving the MBS session data.

In embodiments of the disclosure, the core network device determines whether to accept the terminal to join the MBS session by receiving the PDU session modification request forwarded by the trusted non-3GPP access network device, and in the case of determining to accept the terminal to join any MBS session, the core network device determines to adopt the shared MBS traffic for transmitting the MBS session data in response to determining that the access network device supports the MBS, which ensures that the access network device supporting the MBS adopts the shared MBS traffic for transmitting the MBS session data, and realizes the support of providing the MBS to the terminal accessed in the non-3GPP mode.

FIG. 4 is a flow chart illustrating a communication method according to an embodiment. The method is applied to a core network device. As shown in FIG. 4, the method includes the following steps S401 to S404.

At step S401, the core network device receives a PDU session modification request from an access network device, in which the PDU session modification request includes an MBS session ID, the MBS session ID represents an MBS session that a terminal requests to join.

At step S402, the core network device determines whether to accept the terminal to join the MBS session.

The access network device is a trusted non-3GPP access network device and the terminal communicates with the core network device in a non-3GPP mode via the trusted non-3GPP access network device.

At step S403, in a case of determining to accept the terminal to join any MBS session, the core network device determines to adopt a shared MBS traffic for transmitting MBS session data in response to determining that the access network device supports MBS.

At step S404, the access network device sends the MBS session data to the access network device, in which the access network device is configured to carry the MBS session data via a non-3GPP radio bearer and send the MBS session data to the terminal in a point to point (PTP) mode or in a point to multipoint (PTM) mode.

The access network device is a trusted non-3GPP access network device and the terminal communicates with the core network device in a non-3GPP mode via the trusted non-3GPP access network device.

In an embodiment, the trusted non-3GPP access network device includes a TNAP, and the TNAP is provided by a trusted non-3GPP satellite or a wireless router.

In particular, the PDU session modification request may be sent by the terminal via an uplink NAS message, and forwarded to the core network device via the access network device. The PDU session modification request may include one or more MBS session IDs, and the disclosure does not limit the number of MBS session IDs.

In some possible implementations, step S402 may be performed by an SMF network element in the core network device. The SMF network element may determine whether to accept the terminal to join the MBS session based on MBS subscription data received from a UDM network element and/or based on a terminal indication received from an MB-SMF network element. If the MBS session that the terminal requests to join is not enabled, the SMF may accept the terminal to join the MBS session and indicate an enabled time to the terminal, or the SMF may refuse the terminal to join the MBS session. If the MBS session that the terminal requests to join is inactive, the SMF may accept the terminal to join the MBS session.

In some optional embodiments, in the case that the SMF accepts the terminal to join the MBS session, the SMF may send an N2 information request to the access network device. The N2 information request may include one or more of: a PDU session ID, an MBS session ID, updated PDU session information, and mapping information between a unicast QoS flow and a multicast QoS flow. If the MBS session does not exist in the trusted non-3GPP access network, the SMF may create an MBS session context for the MBS session in the trusted non-3GPP access network. And the SMF may inform the trusted non-3GPP access network of a relationship between a multicast MBS session context and a PDU session context of the terminal based on the MBS session ID and the mapping information between the unicast QoS flow and the multicast QoS flow.

In an embodiment, a non-3GPP radio bearer is configured by the access network device for the MBS session based on a first signaling in response to determining that the access network device supports the MBS and determining that the MBS session joined by the terminal is active; and the first signaling includes a PDU session modification command, obtained by exchanging between the access network device and the terminal.

In particular, the access network device may configure radio resources for the MBS session in response to the MBS session being active. In the case that the access network device determines to support the MBS, the access network device may exchange the first signaling with the terminal. The first signaling is used for the access network device to configure for the terminal non-3GPP radio resources for a multicast or broadcast MBS session based on the first signaling. The first signaling includes the PDU session modification command. In a possible implementation, if the access network device does not support the MBS, the access network device may reconfigure the radio resources for unicast transmission of the MBS session data via an associated PDU session.

In an optional embodiment, the access network device may send a PDU session modification response to the core network device. The PDU session modification response may be carried by an N2 information response. The PDU session modification response may indicate to the core network device whether the access network device supports the MBS or not. In the case that the access network device does not support the MBS, a unicast QoS flow received by the access network device may be indicated to the core network device.

In an embodiment, adopting the shared MBS traffic for transmitting the MBS session data may include: sending, by an MB-UPF, a multicast PDU to the access network device via an N3mb interface corresponding to the MBS session, so that all the terminals joining the MBS session via the access network device share the interface for receiving the MBS session data.

In an embodiment, the access network device may determine to use the PTP mode or the PTM mode based on the MBS session data. If the MBS session data is unicast data, the MBS session data may be sent to the corresponding terminal in the PTP mode. If the MBS session data is multicast data or broadcast data, the MBS session data may be sent to the corresponding one or more terminals in the PTM mode.

In embodiments of the disclosure, the core network device determines whether to accept the terminal to join the MBS session by receiving the PDU session modification request forwarded by the trusted non-3GPP access network device, and in the case of determining to accept the terminal to join any MBS session, the core network device determines to adopt the shared MBS traffic for transmitting the MBS session data in response to determining that the access network device supports the MBS, which ensures that the access network device supporting the MBS adopts the shared MBS traffic for transmitting the MBS session data, and realizes the support of providing the MBS to the terminal accessed in the non-3GPP mode.

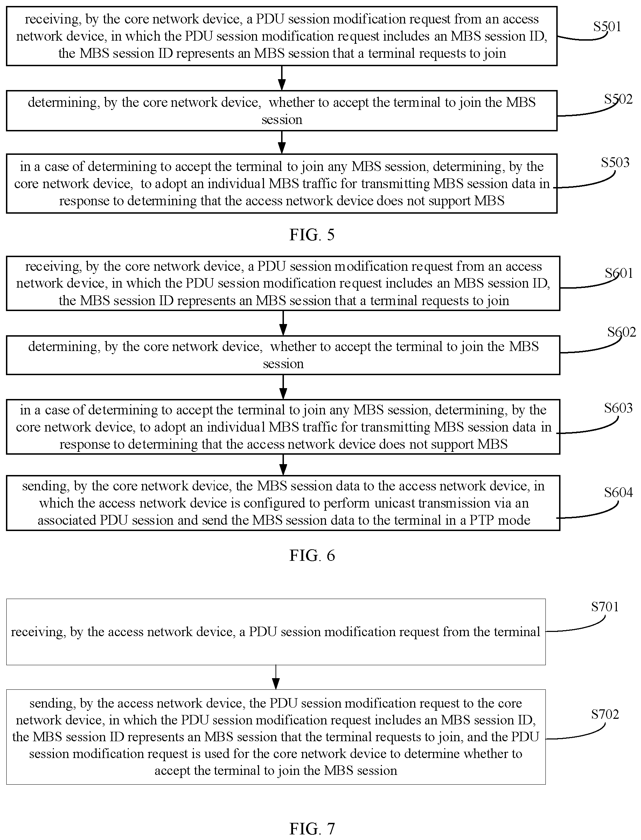

FIG. 5 is a flow chart illustrating a communication method according to an embodiment. The method is applied to a core network device. As shown in FIG. 5, the method includes the following steps S501 to S503.

At step S501, the core network device receives a PDU session modification request from an access network device, in which the PDU session modification request includes an MBS session ID, the MBS session ID represents an MBS session that a terminal requests to join.

At step S502, the core network device determines whether to accept the terminal to join the MBS session.

The access network device is a trusted non-3GPP access network device and the terminal communicates with the core network device in a non-3GPP mode via the trusted non-3GPP access network device.

At step S503, in a case of determining to accept the terminal to join any MBS session, the core network device determines to adopt an individual MBS traffic for transmitting MBS session data in response to determining that the access network device does not support MBS.

The access network device is a trusted non-3GPP access network device and the terminal communicates with the core network device in a non-3GPP mode via the trusted non-3GPP access network device.

In an embodiment, the trusted non-3GPP access network device includes a TNAP, and the TNAP is provided by a trusted non-3GPP satellite or a wireless router.

In particular, the PDU session modification request may be sent by the terminal via an uplink NAS message, and forwarded to the core network device via the access network device. The PDU session modification request may include one or more MBS session IDs, and the disclosure does not limit the number of MBS session IDs.

In some possible implementations, step S502 may be performed by an SMF network element in the core network device. The SMF network element may determine whether to accept the terminal to join the MBS session based on MBS subscription data received from a UDM network element and/or based on a terminal indication received from an MB-SMF network element. If the MBS session that the terminal requests to join is not enabled, the SMF may accept the terminal to join the MBS session and indicate an enabled time to the terminal, or the SMF may refuse the terminal to join the MBS session. If the MBS session that the terminal requests to join is inactive, the SMF may accept the terminal to join the MBS session.

In some optional embodiments, in the case that the SMF accepts the terminal to join the MBS session, the SMF may send an N2 information request to the access network device. The N2 information request may include one or more of: a PDU session ID, an MBS session ID, updated PDU session information, and mapping information between a unicast QoS flow and a multicast QoS flow. If the MBS session does not exist in the trusted non-3GPP access network, the SMF may create an MBS session context for the MBS session in the trusted non-3GPP access network. And the SMF may inform the trusted non-3GPP access network of a relationship between a multicast MBS session context and a PDU session context of the terminal based on the MBS session ID and the mapping information between the unicast QoS flow and the multicast QoS flow.

In an embodiment, a non-3GPP radio bearer is configured by the access network device for the MBS session based on a first signaling in response to determining that the access network device supports the MBS and determining that the MBS session joined by the terminal is active; and the first signaling includes a PDU session modification command, obtained by exchanging between the access network device and the terminal.

In particular, the access network device may configure radio resources for the MBS session in response to the MBS session being active. In the case that the access network device determines to support the MBS, the access network device may perform first signaling exchanging with the terminal. The first signaling is used for the access network device to configure for the terminal non-3GPP radio resources for a multicast or broadcast MBS session based on the first signaling. The first signaling includes a PDU session modification command. In a possible implementation, if the access network device does not support the MBS, the access network device may reconfigure the radio resources for unicast transmission of the MBS session data via an associated PDU session.

In an optional embodiment, the access network device may send a PDU session modification response to the core network device. The PDU session modification response may be carried by an N2 information response. The PDU session modification response may indicate to the core network device whether the access network device supports the MBS or not. In the case that the access network device does not support the MBS, a unicast QoS flow received by the access network device may be indicated to the core network device.

In an exemplary embodiment, adopting the individual MBS traffic for transmitting the MBS session data may include: sending, by an MB-UPF, a multicast PDU to a UPF via an N19mb interface corresponding to the MBS session. Each MBS session has only one interface with the corresponding UPF, i.e., all PDU sessions provided by each UPF share the interface, so that the UPF forwards multicast MBS session data to the access network device in a unicast mode, and the access network device forwards the MBS session data to the terminal in a unicast mode. The MBS session data is transmitted through a radio bearer corresponding to an associated QoS flow of an associated PDU session, i.e., the MBS session data is sent to the access network device via the PDU session, and the MBS session data is forwarded to the terminal by the access network device. The associated QoS flow may be carried by the N2 information request described above.

In embodiments of the disclosure, the core network device determines whether to accept the terminal to join the MBS session by receiving the PDU session modification request forwarded by the trusted non-3GPP access network device, and in the case of determining to accept the terminal to join any MBS session, the core network device determines to adopt the individual MBS traffic for transmitting the MBS session data in response to determining that the access network device does not support the MBS, which enables that the access network device not supporting the MBS may transmit the MBS session data via the PDU session, ensures that the access network device may effectively transmit the MBS session data in the case of not supporting the MBS, and realizes the support of providing the MBS to the terminal accessed in the non-3GPP mode.

FIG. 6 is a flow chart illustrating a communication method according to an embodiment. The method is applied to a core network device. As shown in FIG. 6, the method includes the following steps S601 to S604.

At step S601, the core network device receives a PDU session modification request from an access network device, in which the PDU session modification request includes an MBS session ID, the MBS session ID represents an MBS session that a terminal requests to join.

At step S602, the core network device determines whether to accept the terminal to join the MBS session.

The access network device is a trusted non-3GPP access network device and the terminal communicates with the core network device in a non-3GPP mode via the trusted non-3GPP access network device.

At step S603, in a case of determining to accept the terminal to join any MBS session, the core network device determines to adopt an individual MBS traffic for transmitting MBS session data in response to determining that the access network device does not support MBS.

At step S604, the core network device sends the MBS session data to the access network device, in which the access network device is configured to perform unicast transmission via an associated PDU session and send the MBS session data to the terminal in a PTP mode.

The access network device is a trusted non-3GPP access network device and the terminal communicates with the core network device in a non-3GPP mode via the trusted non-3GPP access network device.

In an embodiment, the trusted non-3GPP access network device includes a TNAP, and the TNAP is provided by a trusted non-3GPP satellite or a wireless router.

In particular, the PDU session modification request may be sent by the terminal via an uplink NAS message, and forwarded to the core network device via the access network device. The PDU session modification request may include one or more MBS session IDs, and the disclosure does not limit the number of MBS session IDs.

In some possible implementations, step S602 may be performed by an SMF network element in the core network device. The SMF network element may determine whether to accept the terminal to join the MBS session based on MBS subscription data received from a UDM network element and/or based on a terminal indication received from an MB-SMF network element. If the MBS session that the terminal requests to join is not enabled, the SMF may accept the terminal to join the MBS session and indicate an enabled time to the terminal, or the SMF may refuse the terminal to join the MBS session. If the MBS session that the terminal requests to join is inactive, the SMF may accept the terminal to join the MBS session.

In some optional embodiments, in the case that the SMF accepts the terminal to join the MBS session, the SMF may send an N2 information request to the access network device. The N2 information request may include one or more of: a PDU session ID, an MBS session ID, updated PDU session information, and mapping information between a unicast QoS flow and a multicast QoS flow. If the MBS session does not exist in the trusted non-3GPP access network, the SMF may create an MBS session context for the MBS session in the trusted non-3GPP access network. And the SMF may inform the trusted non-3GPP access network of a relationship between a multicast MBS session context and a PDU session context of the terminal based on the MBS session ID and the mapping information between the unicast QoS flow and the multicast QoS flow.

In an embodiment, the associated PDU session is configured by the access network device for the MBS session in response to determining that the access network device does not support the MBS and determining that the MBS session joined by the terminal is active.

In particular, the access network device may configure radio resources for the MBS session in response to the MBS session being active. In the case that the access network device determines to not support the MBS, the access network device may configure the radio resources for unicast transmission of the MBS session data via the associated PDU session, i.e., the access network device may configure the associated PDU session for the MBS session joined by the terminal in the case that the access network device determines that the access network device does not support the MBS.

In an optional embodiment, the access network device may send a PDU session modification response to the core network device. The PDU session modification response may be carried by an N2 information response. The PDU session modification response may indicate to the core network device whether the access network device supports the MBS or not. In the case that the access network device does not support the MBS, a unicast QoS flow received by the access network device may be indicated to the core network device.

In an embodiment, adopting the individual MBS traffic for transmitting the MBS session data may include: sending, by an MB-UPF, a multicast PDU to a UPF via an N19mb interface corresponding to the MBS session. Each MBS session has only one interface with the corresponding UPF, i.e., all PDU sessions provided by each UPF share the interface, so that the UPF forwards multicast MBS session data to the access network device in a unicast mode, and the access network device forwards the MBS session data to the terminal in a unicast mode. The MBS session data is transmitted through a radio bearer corresponding to an associated QoS flow of an associated PDU session, i.e., the MBS session data is sent to the access network device via the PDU session, and the MBS session data is forwarded to the terminal by the access network device. The associated QoS flow may be carried by the N2 information request described above.

In an embodiment, the access network device sending the MBS session data to the terminal in the PTP mode may refer to sending multicast or broadcast MBS session data to the terminals that join the MBS session via the access network device respectively via the PDU session.

In embodiments of the disclosure, the core network device determines whether to accept the terminal to join the MBS session by receiving the PDU session modification request forwarded by the trusted non-3GPP access network device, and in the case of determining to accept the terminal to join any MBS session, the core network device determines to adopt the individual MBS traffic for transmitting the MBS session data in response to determining that the access network device does not support the MBS, which enables that the access network device not supporting the MBS may adopt the individual MBS traffic for transmitting the MBS session data in a PTP mode via the PDU session, ensures that the access network device may effectively transmit the MBS session data in the case of not supporting the MBS, and realizes the support of providing the MBS to the terminal accessed in the non-3GPP mode.

FIG. 7 is a flow chart illustrating a communication method according to an embodiment. The method is applied to an access network device. The access network device is a trusted non-3GPP access network device, and a terminal communicates with a core network device via the trusted non-3GPP access network device in a non-3GPP mode. As shown in FIG. 7, the method includes following steps S701 to S702.

At step S701, the access network device receives a PDU session modification request from the terminal.

At step S702, the access network device sends the PDU session modification request to the core network device, in which the PDU session modification request includes an MBS session ID, the MBS session ID represents an MBS session that the terminal requests to join, and the PDU session modification request is used for the core network device to determine whether to accept the terminal to join the MBS session.

In an embodiment, the trusted non-3GPP access network device includes a TNAP, and the TNAP is provided by a trusted non-3GPP satellite or a wireless router.

In particular, the PDU session modification request may be sent by the terminal via an uplink NAS message, and forwarded to the core network device via the access network device. The PDU session modification request may include one or more MBS session IDs, and the disclosure does not limit the number of MBS session IDs.

In some possible implementations, determining by the core network device whether to accept the terminal to join the MBS session may specifically be performed by an SMF network element in the core network device. The SMF network element may determine whether to accept the terminal to join the MBS session based on MBS subscription data received from a UDM network element and/or based on a terminal indication received from an MB-SMF network element. If the MBS session that the terminal requests to join is not enabled, the SMF may accept the terminal to join the MBS session and indicate an enabled time to the terminal, or the SMF may refuse the terminal to join the MBS session. If the MBS session that the terminal requests to join is inactive, the SMF may accept the terminal to join the MBS session.

In some optional embodiments, in the case that the SMF accepts the terminal to join the MBS session, the SMF may send an N2 information request to the access network device. The N2 information request may include one or more of: a PDU session ID, an MBS session ID, updated PDU session information, and mapping information between a unicast QoS flow and a multicast QoS flow. If the MBS session does not exist in the trusted non-3GPP access network, the SMF may create an MBS session context for the MBS session in the trusted non-3GPP access network. And the SMF may inform the trusted non-3GPP access network of a relationship between a multicast MBS session context and a PDU session context of the terminal based on the MBS session ID and the mapping information between the unicast QoS flow and the multicast QoS flow.

In embodiments of the disclosure, the trusted non-3GPP access network device enables the core network device to determine whether to accept the terminal to join the MBS session by forwarding the PDU session modification request sent by the terminal to the core network device, so that the core network device may provide the MBS to the terminal accessed in the non-3GPP mode.

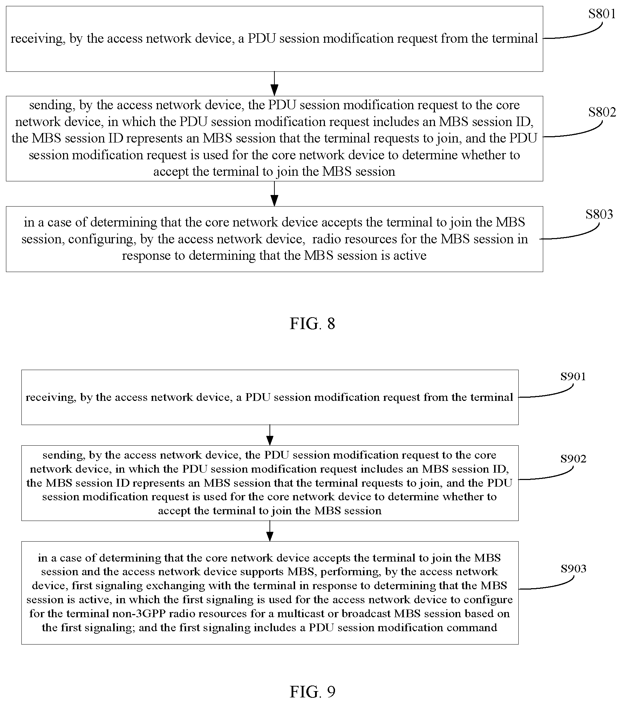

FIG. 8 is a flow chart illustrating a communication method according to an embodiment. The method is applied to an access network device. The access network device is a trusted non-3GPP access network device, and a terminal communicates with a core network device via the trusted non-3GPP access network device in a non-3GPP mode. As shown in FIG. 8, the method includes following steps S801 to S803.

At step S801, the access network device receives a PDU session modification request from the terminal.

At step S802, the access network device sends the PDU session modification request to the core network device, in which the PDU session modification request includes an MBS session ID, the MBS session ID represents an MBS session that the terminal requests to join, and the PDU session modification request is used for the core network device to determine whether to accept the terminal to join the MBS session.

At step S803, in a case of determining that the core network device accepts the terminal to join the MBS session, the access network device configures radio resources for the MBS session in response to determining that the MBS session is active.

In an embodiment, the trusted non-3GPP access network device includes a TNAP, and the TNAP is provided by a trusted non-3GPP satellite or a wireless router.

In particular, the PDU session modification request may be sent by the terminal via an uplink NAS message, and forwarded to the core network device via the access network device. The PDU session modification request may include one or more MBS session IDs, and the disclosure does not limit the number of MBS session IDs.

In some possible implementations, determining by the core network device whether to accept the terminal to join the MBS session may specifically be performed by an SMF network element in the core network device. The SMF network element may determine whether to accept the terminal to join the MBS session based on MBS subscription data received from a UDM network element and/or based on a terminal indication received from an MB-SMF network element. If the MBS session that the terminal requests to join is not enabled, the SMF may accept the terminal to join the MBS session and indicate an enabled time to the terminal, or the SMF may refuse the terminal to join the MBS session. If the MBS session that the terminal requests to join is inactive, the SMF may accept the terminal to join the MBS session.

In some optional embodiments, in the case that the SMF accepts the terminal to join the MBS session, the SMF may send an N2 information request to the access network device. The N2 information request may include one or more of: a PDU session ID, an MBS session ID, updated PDU session information, and mapping information between a unicast QoS flow and a multicast QoS flow. If the MBS session does not exist in the trusted non-3GPP access network, the SMF may create an MBS session context for the MBS session in the trusted non-3GPP access network. And the SMF may inform the trusted non-3GPP access network of a relationship between a multicast MBS session context and a PDU session context of the terminal based on the MBS session ID and the mapping information between the unicast QoS flow and the multicast QoS flow.

In an optional embodiment, the access network device may send a PDU session modification response to the core network device. The PDU session modification response may be carried by an N2 information response. The PDU session modification response may indicate to the core network device whether the access network device supports the MBS or not. In the case that the access network device does not support the MBS, a unicast QoS flow received by the access network device may be indicated to the core network device.

In embodiments of the disclosure, the trusted non-3GPP access network device enables the core network device to determine whether to accept the terminal to join the MBS session by forwarding the PDU session modification request sent by the terminal to the core network device, and after the terminal is accepted to join the MBS session, the access network device configures for the terminal the radio resources for the multicast or broadcast MBS session when the MBS session is active, which ensures that the access network device may support sending the MBS session data from the core network device to the terminal via the radio bearer, and enables the core network device to provide the MBS to the terminal accessed in the non-3GPP mode.

FIG. 9 is a flow chart illustrating a communication method according to an embodiment. The method is applied to an access network device. The access network device is a trusted non-3GPP access network device, and a terminal communicates with a core network device via the trusted non-3GPP access network device in a non-3GPP mode. As shown in FIG. 9, the method includes following steps S901 to S903.

At step S901, the access network device receives a PDU session modification request from the terminal.

At step S902, the access network device sends the PDU session modification request to the core network device, in which the PDU session modification request includes an MBS session ID, the MBS session ID represents an MBS session that the terminal requests to join, and the PDU session modification request is used for the core network device to determine whether to accept the terminal to join the MBS session.

At step S903, in a case of determining that the core network device accepts the terminal to join the MBS session and the access network device supports MBS, the access network device performs first signaling exchanging with the terminal in response to determining that the MBS session is active, in which the first signaling is used for the access network device to configure for the terminal non-3GPP radio resources for a multicast or broadcast MBS session based on the first signaling; and the first signaling includes a PDU session modification command.

In an embodiment, the trusted non-3GPP access network device includes a TNAP, and the TNAP is provided by a trusted non-3GPP satellite or a wireless router.

In particular, the PDU session modification request may be sent by the terminal via an uplink NAS message, and forwarded to the core network device via the access network device. The PDU session modification request may include one or more MBS session IDs, and the disclosure does not limit the number of MBS session IDs.

In some possible implementations, determining by the core network device whether to accept the terminal to join the MBS session may specifically be performed by an SMF network element in the core network device. The SMF network element may determine whether to accept the terminal to join the MBS session based on MBS subscription data received from a UDM network element and/or based on a terminal indication received from an MB-SMF network element. If the MBS session that the terminal requests to join is not enabled, the SMF may accept the terminal to join the MBS session and indicate an enabled time to the terminal, or the SMF may refuse the terminal to join the MBS session. If the MBS session that the terminal requests to join is inactive, the SMF may accept the terminal to join the MBS session.

In some optional embodiments, in the case that the SMF accepts the terminal to join the MBS session, the SMF may send an N2 information request to the access network device. The N2 information request may include one or more of: a PDU session ID, an MBS session ID, updated PDU session information, and mapping information between a unicast QoS flow and a multicast QoS flow. If the MBS session does not exist in the trusted non-3GPP access network, the SMF may create an MBS session context for the MBS session in the trusted non-3GPP access network. And the SMF may inform the trusted non-3GPP access network of a relationship between a multicast MBS session context and a PDU session context of the terminal based on the MBS session ID and the mapping information between the unicast QoS flow and the multicast QoS flow.

In an embodiment, the access network device may configure radio resources for the MBS session in response to the MBS session being active. The access network device may perform the first signaling exchanging with the terminal, in which the first signaling is used for the access network device to configure for the terminal non-3GPP radio resources for the multicast or broadcast MBS session based on the first signaling; and the first signaling includes a PDU session modification command. In a possible implementation, if the access network device does not support the MBS, the access network device may reconfigure the radio resources for unicast transmission of the MBS session data via the associated PDU session.

In an optional embodiment, the access network device may send a PDU session modification response to the core network device. The PDU session modification response may be carried by an N2 information response. The PDU session modification response may indicate to the core network device whether the access network device supports the MBS or not. In the case that the access network device does not support the MBS, a unicast QoS flow received by the access network device may be indicated to the core network device.

In embodiments of the disclosure, the trusted non-3GPP access network device enables the core network device to determine whether to accept the terminal to join the MBS session by forwarding the PDU session modification request sent by the terminal to the core network device. After the terminal is accepted to join the MBS session, the access network device may perform the signaling exchanging with the terminal when the MBS session is active, and configure for the terminal the radio resources for the multicast or broadcast MBS session based on the exchanged signaling. In this way, the core network device may provide the MBS to the terminal accessed in the non-3GPP mode.

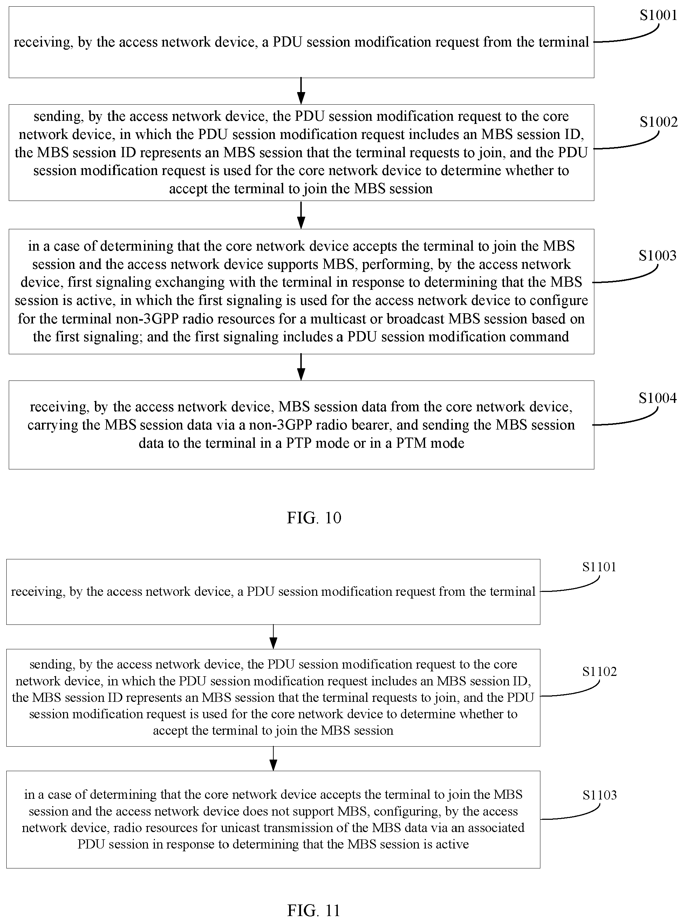

FIG. 10 is a flow chart illustrating a communication method according to an embodiment. The method is applied to an access network device. The access network device is a trusted non-3GPP access network device, and a terminal communicates with a core network device via the trusted non-3GPP access network device in a non-3GPP mode. As shown in FIG. 9, the method includes following steps S1001 to S1004.

At step S1001, the access network device receives a PDU session modification request from the terminal.

At step S1002, the access network device sends the PDU session modification request to the core network device, in which the PDU session modification request includes an MBS session ID, the MBS session ID represents an MBS session that the terminal requests to join, and the PDU session modification request is used for the core network device to determine whether to accept the terminal to join the MBS session.

At step S1003, in a case of determining that the core network device accepts the terminal to join the MBS session and the access network device supports MBS, the access network device performs first signaling exchanging with the terminal in response to determining that the MBS session is active, in which the first signaling is used for the access network device to configure for the terminal non-3GPP radio resources for a multicast or broadcast MBS session based on the first signaling; and the first signaling includes a PDU session modification command.

At step S1004, the access network device receives MBS session data from the core network device, carries the MBS session data via a non-3GPP radio bearer, and sends the MBS session data to the terminal in a PTP mode or in a PTM mode.

In an embodiment, the trusted non-3GPP access network device includes a TNAP, and the TNAP is provided by a trusted non-3GPP satellite or a wireless router.

In particular, the PDU session modification request may be sent by the terminal via an uplink NAS message, and forwarded to the core network device via the access network device. The PDU session modification request may include one or more MBS session IDs, and the disclosure does not limit the number of MBS session IDs.

In some possible implementations, determining by the core network device whether to accept the terminal to join the MBS session may specifically be performed by an SMF network element in the core network device. The SMF network element may determine whether to accept the terminal to join the MBS session based on MBS subscription data received from a UDM network element and/or based on a terminal indication received from an MB-SMF network element. If the MBS session that the terminal requests to join is not enabled, the SMF may accept the terminal to join the MBS session and indicate an enabled time to the terminal, or the SMF may refuse the terminal to join the MBS session. If the MBS session that the terminal requests to join is inactive, the SMF may accept the terminal to join the MBS session.

In some optional embodiments, in the case that the SMF accepts the terminal to join the MBS session, the SMF may send an N2 information request to the access network device. The N2 information request may include one or more of: a PDU session ID, an MBS session ID, updated PDU session information, and mapping information between a unicast QoS flow and a multicast QoS flow. If the MBS session does not exist in the trusted non-3GPP access network, the SMF may create an MBS session context for the MBS session in the trusted non-3GPP access network. And the SMF may inform the trusted non-3GPP access network of a relationship between a multicast MBS session context and a PDU session context of the terminal based on the MBS session ID and the mapping information between the unicast QoS flow and the multicast QoS flow.

In an embodiment, the access network device may configure radio resources for the MBS session in response to the MBS session being active. The access network device may perform the first signaling exchanging with the terminal, in which the first signaling is used for the access network device to configure for the terminal non-3GPP radio resources for the multicast or broadcast MBS session based on the first signaling; and the first signaling includes a PDU session modification command. In a possible implementation, if the access network device does not support the MBS, the access network device may reconfigure the radio resources for unicast transmission of the MBS session data via the associated PDU session.

In an optional embodiment, the access network device may send a PDU session modification response to the core network device. The PDU session modification response may be carried by an N2 information response. The PDU session modification response may indicate to the core network device whether the access network device supports the MBS or not. In the case that the access network device does not support the MBS, a unicast QoS flow received by the access network device may be indicated to the core network device.

In an embodiment, the MBS session data sent by the core network device may be the MBS session data sent adopting a shared MBS traffic. In particular, an MB-UPF sends a multicast PDU to the access network device via an N3mb interface corresponding to the MBS session, so that all the terminals joining the MBS session via the access network device share the interface for receiving the MBS session data.

In an embodiment, the access network device may determine to adopt the PTP mode or the PTM mode based on the MBS session data. If the MBS session data is unicast data, the MBS session data may be sent to the corresponding terminal in the PTP mode. If the MBS session data is multicast data or broadcast data, the MBS session data may be sent to the corresponding one or more terminals in the PTM mode.

In embodiments of the disclosure, the trusted non-3GPP access network device enables the core network device to determine whether to accept the terminal to join the MBS session by forwarding the PDU session modification request sent by the terminal to the core network device. After the terminal is accepted to join the MBS session, the access network device may perform the signaling exchanging with the terminal when the MBS session is active, configure for the terminal the radio resources for the multicast or broadcast MBS session based on the exchanged signaling, and send the MBS session data carried via the non-3GPP radio bearer to the terminal in the PTP mode or in the PTM mode. In this way, the core network equipment may provide multicast and broadcast services to terminals accessed in the non-3GPP mode.

FIG. 11 is a flow chart illustrating a communication method according to an embodiment. The method is applied to an access network device. The access network device is a trusted non-3GPP access network device, and a terminal communicates with a core network device via the trusted non-3GPP access network device in a non-3GPP mode. As shown in FIG. 9, the method includes following steps S1101 to S1103.

At step S1101, the access network device receives a PDU session modification request from the terminal.

At step S1102, the access network device sends the PDU session modification request to the core network device, in which the PDU session modification request includes an MBS session ID, the MBS session ID represents an MBS session that the terminal requests to join, and the PDU session modification request is used for the core network device to determine whether to accept the terminal to join the MBS session.

At step S1103, in a case of determining that the core network device accepts the terminal to join the MBS session and the access network device does not support MBS, the access network device configures radio resources for unicast transmission of MBS data via an associated PDU session in response to determining that the MBS session is active.

In an embodiment, the trusted non-3GPP access network device includes a TNAP, and the TNAP is provided by a trusted non-3GPP satellite or a wireless router.

In particular, the PDU session modification request may be sent by the terminal via an uplink NAS message, and forwarded to the core network device via the access network device. The PDU session modification request may include one or more MBS session IDs, and the disclosure does not limit the number of MBS session IDs.

In some possible implementations, determining by the core network device whether to accept the terminal to join the MBS session may specifically be performed by an SMF network element in the core network device. The SMF network element may determine whether to accept the terminal to join the MBS session based on MBS subscription data received from a UDM network element and/or based on a terminal indication received from an MB-SMF network element. If the MBS session that the terminal requests to join is not enabled, the SMF may accept the terminal to join the MBS session and indicate an enabled time to the terminal, or the SMF may refuse the terminal to join the MBS session. If the MBS session that the terminal requests to join is inactive, the SMF may accept the terminal to join the MBS session.

In some optional embodiments, in the case that the SMF accepts the terminal to join the MBS session, the SMF may send an N2 information request to the access network device. The N2 information request may include one or more of: a PDU session ID, an MBS session ID, updated PDU session information, and mapping information between a unicast QoS flow and a multicast QoS flow. If the MBS session does not exist in the trusted non-3GPP access network, the SMF may create an MBS session context for the MBS session in the trusted non-3GPP access network. And the SMF may inform the trusted non-3GPP access network of a relationship between a multicast MBS session context and a PDU session context of the terminal based on the MBS session ID and the mapping information between the unicast QoS flow and the multicast QoS flow.

In an embodiment, the access network device may configure radio resources for the MBS session in response to the MBS session being active. The access network device may perform first signaling exchanging with the terminal, in which the first signaling is used for the access network device to configure for the terminal non-3GPP radio resources for the multicast or broadcast MBS session based on the first signaling; and the first signaling includes a PDU session modification command. In a possible implementation, if the access network device does not support the MBS, the access network device may reconfigure the radio resources for unicast transmission of the MBS session data via the associated PDU session.

In an optional embodiment, the access network device may send a PDU session modification response to the core network device. The PDU session modification response may be carried by an N2 information response. The PDU session modification response may indicate to the core network device whether the access network device supports the MBS or not. In the case that the access network device does not support the MBS, a unicast QoS flow received by the access network device may be indicated to the core network device.

In embodiments of the disclosure, the trusted non-3GPP access network device enables the core network device to determine whether to accept the terminal to join the MBS session by forwarding the PDU session modification request sent by the terminal to the core network device, and after the terminal is accepted to join the MBS session, the access network device configures the radio resources for the unicast transmission of the MBS data via the associated PDU session when the MBS session is active, which ensures that the access network device may effectively transmit the MBS session data in the case of not supporting the MBS, and enables the core network device to provide the MBS to the terminal accessed in the non-3GPP mode.

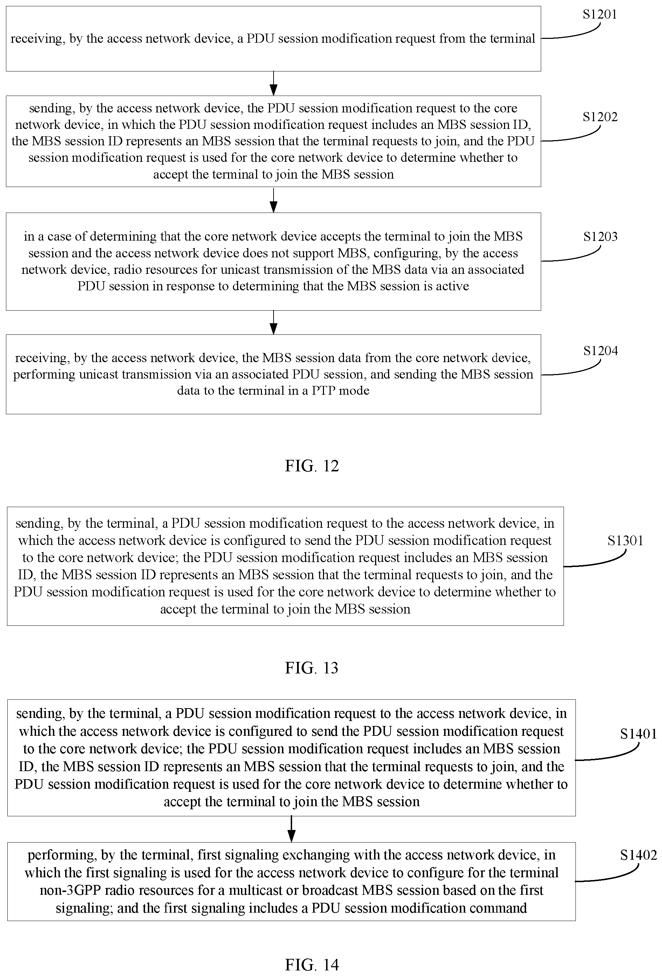

FIG. 12 is a flow chart illustrating a communication method according to an embodiment. The method is applied to an access network device. The access network device is a trusted non-3GPP access network device, and a terminal communicates with a core network device via the trusted non-3GPP access network device in a non-3GPP mode. As shown in FIG. 9, the method includes following steps S1201 to S1204.

At step S1201, the access network device receives a PDU session modification request from the terminal.

At step S1202, the access network device sends the PDU session modification request to the core network device, in which the PDU session modification request includes an MBS session ID, the MBS session ID represents an MBS session that the terminal requests to join, and the PDU session modification request is used for the core network device to determine whether to accept the terminal to join the MBS session.

At step S1203, in a case of determining that the core network device accepts the terminal to join the MBS session and the access network device does not support MBS, the access network device configures radio resources for unicast transmission of MBS data via an associated PDU session in response to determining that the MBS session is active.

At step S1204, the access network device receives the MBS session data from the core network device, performs unicast transmission via the associated PDU session, and sends the MBS session data to the terminal in a PTP mode.

In an embodiment, the trusted non-3GPP access network device includes a TNAP, and the TNAP is provided by a trusted non-3GPP satellite or a wireless router.

In particular, the PDU session modification request may be sent by the terminal via an uplink NAS message, and forwarded to the core network device via the access network device. The PDU session modification request may include one or more MBS session IDs, and the disclosure does not limit the number of MBS session IDs.

In some possible implementations, determining by the core network device whether to accept the terminal to join the MBS session may specifically be performed by an SMF network element in the core network device. The SMF network element may determine whether to accept the terminal to join the MBS session based on MBS subscription data received from a UDM network element and/or based on a terminal indication received from an MB-SMF network element. If the MBS session that the terminal requests to join is not enabled, the SMF may accept the terminal to join the MBS session and indicate an enabled time to the terminal, or the SMF may refuse the terminal to join the MBS session. If the MBS session that the terminal requests to join is inactive, the SMF may accept the terminal to join the MBS session.

In some optional embodiments, in the case that the SMF accepts the terminal to join the MBS session, the SMF may send an N2 information request to the access network device. The N2 information request may include one or more of: a PDU session ID, an MBS session ID, updated PDU session information, and mapping information between a unicast QoS flow and a multicast QoS flow. If the MBS session does not exist in the trusted non-3GPP access network, the SMF may create an MBS session context for the MBS session in the trusted non-3GPP access network. And the SMF may inform the trusted non-3GPP access network of a relationship between a multicast MBS session context and a PDU session context of the terminal based on the MBS session ID and the mapping information between the unicast QoS flow and the multicast QoS flow.

In an embodiment, the access network device may configure radio resources for the MBS session in response to the MBS session being active. The access network device may perform the first signaling exchanging with the terminal, in which the first signaling is used for the access network device to configure for the terminal non-3GPP radio resources for the multicast or broadcast MBS session based on the first signaling; and the first signaling includes a PDU session modification command. In a possible implementation, if the access network device does not support the MBS, the access network device may reconfigure the radio resources for unicast transmission of the MBS session data via the associated PDU session.

In an optional embodiment, the access network device may send a PDU session modification response to the core network device. The PDU session modification response may be carried by an N2 information response. The PDU session modification response may indicate to the core network device whether the access network device supports the MBS or not. In the case that the access network device does not support the MBS, a unicast QoS flow received by the access network device may be indicated to the core network device.

In an embodiment, the MBS session data sent by the core network device may be sent adopting an individual MBS traffic. In particular, an MB-UPF sends a multicast PDU to a UPF via an N19mb interface corresponding to the MBS session. Each MBS session has only one interface with the corresponding UPF, i.e., all PDU sessions provided by each UPF share the interface, so that the UPF forwards multicast MBS session data to the access network device in a unicast mode, and the access network device forwards the MBS session data to the terminal in a unicast mode. The MBS session data is transmitted through a radio bearer corresponding to an associated QoS flow of an associated PDU session, i.e., the MBS session data is sent to the access network device via the PDU session, and the MBS session data is forwarded to the terminal by the access network device. The associated QoS flow may be carried by the N2 information request described above.

In an embodiment, the access network device sending the MBS session data to the terminal in the PTP mode may refer to sending multicast or broadcast MBS session data to the terminals that join the MBS session via the access network device respectively via the PDU session.

In embodiments of the disclosure, the trusted non-3GPP access network device enables the core network device to determine whether to accept the terminal to join the MBS session by forwarding the PDU session modification request sent by the terminal to the core network device, and after the terminal is accepted to join the MBS session, the core network device performs the unicast transmission via the associated PDU session when the MBS session is active, and sends the MBS session data to the terminal in the PTP mode, which ensures that the access network device may effectively transmit the MBS session data in the case of not supporting the MBS, and enables the core network device to provide the MBS to the terminal accessed in the non-3GPP mode.

FIG. 13 is a flow chart illustrating a communication method according to an embodiment. The method is applied to a terminal. The terminal communicates with a core network device via an access network device in a non-3GPP mode, and the access network device is a trusted non-3GPP access network device. As shown in FIG. 13, the method includes following step S1301.

At step S1301, the terminal sends a PDU session modification request to the access network device, in which the access network device is configured to send the PDU session modification request to the core network device; the PDU session modification request includes an MBS session ID, the MBS session ID represents an MBS session that the terminal requests to join, and the PDU session modification request is used for the core network device to determine whether to accept the terminal to join the MBS session.

In an embodiment, the trusted non-3GPP access network device includes a TNAP, and the TNAP is provided by a trusted non-3GPP satellite or a wireless router.

In particular, the PDU session modification request may be sent by the terminal via an uplink NAS message, and forwarded to the core network device via the access network device. The PDU session modification request may include one or more MBS session IDs, and the disclosure does not limit the number of MBS session IDs.

In some possible implementations, determining by the core network device whether to accept the terminal to join the MBS session may specifically be performed by an SMF network element in the core network device. The SMF network element may determine whether to accept the terminal to join the MBS session based on MBS subscription data received from a UDM network element and/or based on a terminal indication received from an MB-SMF network element. If the MBS session that the terminal requests to join is not enabled, the SMF may accept the terminal to join the MBS session and indicate an enabled time to the terminal, or the SMF may refuse the terminal to join the MBS session. If the MBS session that the terminal requests to join is inactive, the SMF may accept the terminal to join the MBS session.

In some optional embodiments, in the case that the SMF accepts the terminal to join the MBS session, the SMF may send an N2 information request to the access network device. The N2 information request may include one or more of: a PDU session ID, an MBS session ID, updated PDU session information, and mapping information between a unicast QoS flow and a multicast QoS flow. If the MBS session does not exist in the trusted non-3GPP access network, the SMF may create an MBS session context for the MBS session in the trusted non-3GPP access network. And the SMF may inform the trusted non-3GPP access network of a relationship between a multicast MBS session context and a PDU session context of the terminal based on the MBS session ID and the mapping information between the unicast QoS flow and the multicast QoS flow.

In embodiments of the disclosure, the terminal accesses the core network device via the non-3GPP access network device in the non-3GPP mode, and enables the core network device to determine whether to accept the terminal to join the MBS session by forwarding the PDU session modification request sent by the terminal to the core network device via the trusted non-3GPP access network device, which enables the core network device to provide the MBS to the terminal accessed in the non-3GPP mode.

FIG. 14 is a flow chart illustrating a communication method according to an embodiment. The method is applied to a terminal. The terminal communicates with a core network device via an access network device in a non-3GPP mode, and the access network device is a trusted non-3GPP access network device. As shown in FIG. 14, the method includes following steps S1401 to S1402.

At step S1401, the terminal sends a PDU session modification request to the access network device, in which the access network device is configured to send the PDU session modification request to the core network device; the PDU session modification request includes an MBS session ID, the MBS session ID represents an MBS session that the terminal requests to join, and the PDU session modification request is used for the core network device to determine whether to accept the terminal to join the MBS session.

At step S 1402, the terminal performs first signaling exchanging with the access network device, in which the first signaling is used for the access network device to configure for the terminal non-3GPP radio resources for a multicast or broadcast MBS session based on the first signaling; and the first signaling includes a PDU session modification command.

In an embodiment, the trusted non-3GPP access network device includes a TNAP, and the TNAP is provided by a trusted non-3GPP satellite or a wireless router.

In particular, the PDU session modification request may be sent by the terminal via an uplink NAS message, and forwarded to the core network device via the access network device. The PDU session modification request may include one or more MBS session IDs, and the disclosure does not limit the number of MBS session IDs.

In some possible implementations, determining by the core network device whether to accept the terminal to join the MBS session may specifically be performed by an SMF network element in the core network device. The SMF network element may determine whether to accept the terminal to join the MBS session based on MBS subscription data received from a UDM network element and/or based on a terminal indication received from an MB-SMF network element. If the MBS session that the terminal requests to join is not enabled, the SMF may accept the terminal to join the MBS session and indicate an enabled time to the terminal, or the SMF may refuse the terminal to join the MBS session. If the MBS session that the terminal requests to join is inactive, the SMF may accept the terminal to join the MBS session.

In some optional embodiments, in the case that the SMF accepts the terminal to join the MBS session, the SMF may send an N2 information request to the access network device. The N2 information request may include one or more of: a PDU session ID, an MBS session ID, updated PDU session information, and mapping information between a unicast QoS flow and a multicast QoS flow. If the MBS session does not exist in the trusted non-3GPP access network, the SMF may create an MBS session context for the MBS session in the trusted non-3GPP access network. And the SMF may inform the trusted non-3GPP access network of a relationship between a multicast MBS session context and a PDU session context of the terminal based on the MBS session ID and the mapping information between the unicast QoS flow and the multicast QoS flow.

In an embodiment, step S 1402 may be performed after the core network device accepts the terminal to join the MBS session and the access network device responds that the MBS session is active. In a possible implementation, if the access network device does not support the MBS, the access network device may reconfigure radio resources for unicast transmission of the MBS session data via an associated PDU session.

In an optional embodiment, the access network device may send a PDU session modification response to the core network device. The PDU session modification response may be carried by an N2 information response. The PDU session modification response may indicate to the core network device whether the access network device supports the MBS or not. In the case that the access network device does not support the MBS, a unicast QoS flow received by the access network device may be indicated to the core network device.

In embodiments of the disclosure, the terminal accesses the core network device via the non-3GPP access network device in the non-3GPP mode, and enables the core network device to determine whether to accept the terminal to join the MBS session by forwarding the PDU session modification request sent by the terminal to the core network device via the trusted non-3GPP access network device, and the terminal performs the first signaling exchanging with the access network device so that the access network device may configure the radio resources for the terminal based on the first signaling, which ensures that the terminal may communicate reliably via the MBS session, and enables the core network device to provide the MBS to the terminal accessed in the non-3GPP mode.

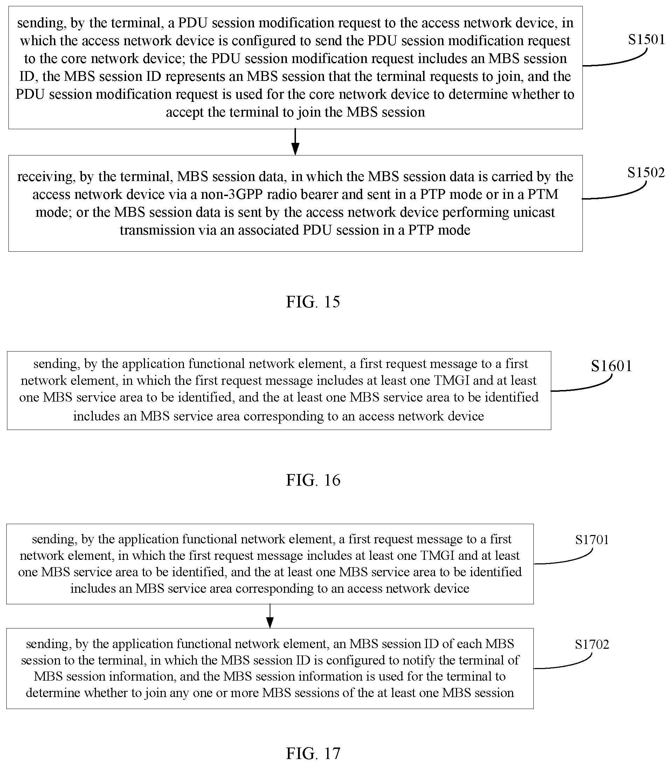

FIG. 15 is a flow chart illustrating a communication method according to an embodiment. The method is applied to a terminal. The terminal communicates with a core network device via an access network device in a non-3GPP mode, and the access network device is a trusted non-3GPP access network device. As shown in FIG. 15, the method includes following steps S1501 to S1502.

At step S1501, the terminal sends a PDU session modification request to the access network device, in which the access network device is configured to send the PDU session modification request to the core network device; the PDU session modification request includes an MBS session ID, the MBS session ID represents an MBS session that the terminal requests to join, and the PDU session modification request is used for the core network device to determine whether to accept the terminal to join the MBS session.

At step S1502, the terminal receives MBS session data, in which the MBS session data is carried by the access network device via a non-3GPP radio bearer and sent in a PTP mode or in a PTM mode; or the MBS session data is sent by the access network device performing unicast transmission via an associated PDU session in a PTP mode.

In an embodiment, the trusted non-3GPP access network device includes a TNAP, and the TNAP is provided by a trusted non-3GPP satellite or a wireless router.

In particular, the PDU session modification request may be sent by the terminal via an uplink NAS message, and forwarded to the core network device via the access network device. The PDU session modification request may include one or more MBS session IDs, and the disclosure does not limit the number of MBS session IDs.

In some possible implementations, determining by the core network device whether to accept the terminal to join the MBS session may specifically be performed by an SMF network element in the core network device. The SMF network element may determine whether to accept the terminal to join the MBS session based on MBS subscription data received from a UDM network element and/or based on a terminal indication received from an MB-SMF network element. If the MBS session that the terminal requests to join is not enabled, the SMF may accept the terminal to join the MBS session and indicate an enabled time to the terminal, or the SMF may refuse the terminal to join the MBS session. If the MBS session that the terminal requests to join is inactive, the SMF may accept the terminal to join the MBS session.

In some optional embodiments, in the case that the SMF accepts the terminal to join the MBS session, the SMF may send an N2 information request to the access network device. The N2 information request may include one or more of: a PDU session ID, an MBS session ID, updated PDU session information, and mapping information between a unicast QoS flow and a multicast QoS flow. If the MBS session does not exist in the trusted non-3GPP access network, the SMF may create an MBS session context for the MBS session in the trusted non-3GPP access network. And the SMF may inform the trusted non-3GPP access network of a relationship between a multicast MBS session context and a PDU session context of the terminal based on the MBS session ID and the mapping information between the unicast QoS flow and the multicast QoS flow.

In an embodiment, a non-3GPP radio bearer is configured by the access network device for the MBS session based on a first signaling in response to determining that the access network device supports the MBS and determining that the MBS session joined by the terminal is active; and the first signaling includes a PDU session modification command, obtained by exchanging between the access network device and the terminal.

In particular, the access network device may configure radio resources for the MBS session in response to the MBS session being active. In the case that the access network device determines to support the MBS, the access network device may perform first signaling exchanging with the terminal. The first signaling is used for the access network device to configure for the terminal non-3GPP radio resources for a multicast or broadcast MBS session based on the first signaling. The first signaling includes a PDU session modification command.

In another embodiment, the associated PDU session is configured by the access network device for the MBS session in response to determining that the access network device does not support MBS and determining that the MBS session joined by the terminal is active.

In the case that the access network device determines to not support the MBS, the access network device may configure the radio resources for unicast transmission of the MBS session data via the associated PDU session, i.e., the access network device may configure the associated PDU session for the MBS session joined by the terminal in the case that the access network device determines that the access network device does not support the MBS.

The access network device may configure radio resources for the MBS session in response to the MBS session being active. The access network device may perform the first signaling exchanging with the terminal, in which the first signaling is used for the access network device to configure for the terminal non-3GPP radio resources for the multicast or broadcast MBS session based on the first signaling; and the first signaling includes the PDU session modification command. In a possible implementation, if the access network device does not support the MBS, the access network device may reconfigure the radio resources for unicast transmission of the MBS session data via the associated PDU session.

In an optional embodiment, the access network device may send a PDU session modification response to the core network device. The PDU session modification response may be carried by an N2 information response. The PDU session modification response may indicate to the core network device whether the access network device supports the MBS or not. In the case that the access network device does not support the MBS, a unicast QoS flow received by the access network device may be indicated to the core network device.

In an embodiment, the MBS session data sent by the core network device may be the MBS session data sent adopting a shared MBS traffic. In particular, an MB-UPF sends a multicast PDU to the access network device via an N3mb interface corresponding to the MBS session, so that all the terminals joining the MBS session via the access network device share the interface for receiving the MBS session data.

In an embodiment, the access network device may determine to adopt the PTP mode or the PTM mode based on the MBS session data. If the MBS session data is unicast data, the MBS session data may be sent to the corresponding terminal in the PTP mode. If the MBS session data is multicast data or broadcast data, the MBS session data may be sent to the corresponding one or more terminals in the PTM mode.

In an embodiment, the MBS session data sent by the core network device may be sent adopting an individual MBS traffic. In particular, an MB-UPF sends a multicast PDU to a UPF via an N19mb interface corresponding to the MBS session. Each MBS session has only one interface with the corresponding UPF, i.e., all PDU sessions provided by each UPF share the interface, so that the UPF forwards multicast MBS session data to the access network device in a unicast mode, and the access network device forwards the MBS session data to the terminal in a unicast mode. The MBS session data is transmitted through a radio bearer corresponding to an associated QoS flow of an associated PDU session, i.e., the MBS session data is sent to the access network device via the PDU session, and the MBS session data is forwarded to the terminal by the access network device. The associated QoS flow may be carried by the N2 information request described above.

In an embodiment, the access network device sending the MBS session data to the terminal in the PTP mode may refer to sending multicast or broadcast MBS session data to the terminals that join the MBS session via the access network device respectively via the PDU session.

In embodiments of the disclosure, the trusted non-3GPP access network device enables the core network device to determine whether to accept the terminal to join the MBS session by forwarding the PDU session modification request sent by the terminal to the core network device, and after the terminal is accepted to join the MBS session, the access network device performs the unicast transmission via the associated PDU session when the MBS session is active, and sends the MBS session data to the terminal in the PTP mode or sends the MBS session data carried via a non-3GPP radio bearer to the terminal in the PTP mode or in the PTM mode, which ensures that the access network device may effectively transmit the MBS session data in the case of supporting or not supporting the MBS, and enables the core network device to provide the MBS to the terminal accessed in the non-3GPP mode.

It should be understood by those skilled in the art that creating the MBS session may include two processes. In a first process, the core network device creates the MBS session. In a second process, the terminal applies to join the MBS session and the core network device (e.g., an AF network element) transmits data to the terminal. The above embodiments describe the second process of a communication architecture in which the terminal accesses the core network device in a non-3GPP mode. The following embodiments describe the first process of creating the MBS session by the core network device.

FIG. 16 is a flow chart illustrating a communication method according to an embodiment. The method is applied to an application function network element in a core network device. As shown in FIG. 16, the method includes following step S1601.

At step S1601, the application functional network element sends a first request message to a first network element, in which the first request message includes at least one TMGI and at least one MBS service area to be identified, and the at least one MBS service area to be identified includes an MBS service area corresponding to an access network device.

The first network element is a network exposure function network element, an MBS function network element, or a network element integrating the network exposure function network element and the MBS function network element. The access network device is a trusted non-3GPP access network device and a terminal communicates with the core network device in a non-3GPP mode via the trusted non-3GPP access network device. The first request message is used for the first network element to allocate the at least one TMGI to the at least one MBS service area to be identified based on the first request message to create at least one MBS session.

It may be understood that the first network element may allocate a TMGI to each MBS service area to be identified to create an MBS session. That is, each MBS session corresponds to only one MBS service area and one TMGI. The TMGI may be used to uniquely identify the MBS session.

The MBS service area to be identified may include an MBS service area corresponding to a non-3GPP access network and/or an MBS service area corresponding to a 3GPP access network.

In embodiments of the disclosure, the application function network element sends the first request message including the MBS service area corresponding to the trusted non-3GPP access network device to the first network element, to enable the first network element to allocate the TMGI to the MBS service area to identify the MBS service area corresponding to the non-3GPP access network device. Thus, the MBS session supporting the non-3GPP access network device is created, which enables the core network device to provide the MBS to the terminal accessed in the non-3GPP mode.

FIG. 17 is a flow chart illustrating a communication method according to an embodiment. The method is applied to an application function network element in a core network device. As shown in FIG. 17, the method includes following steps S1701 to S1702.

At step S1701, the application functional network element sends a first request message to a first network element, in which the first request message includes at least one TMGI and at least one MBS service area to be identified, and the at least one MBS service area to be identified includes an MBS service area corresponding to an access network device.

The first network element is a network exposure function network element, an MBS function network element, or a network element integrating the network exposure function network element and the MBS function network element. The access network device is a trusted non-3GPP access network device and a terminal communicates with the core network device in a non-3GPP mode via the trusted non-3GPP access network device. The first request message is used for the first network element to allocate the at least one TMGI to the at least one MBS service area to be identified based on the first request message to create at least one MBS session.

At step S1702, the application function network element sends an MBS session ID of each MBS session to the terminal, in which the MBS session ID is configured to notify the terminal of MBS session information, and the MBS session information is used for the terminal to determine whether to join any one or more MBS sessions of the at least one MBS session.

In an embodiment, after creating the MBS session, the core network device may send one or more MBS session IDs of the created one or more MBS sessions to the terminal. The terminal may determine information related to each MBS session based on the MBS session ID of each MBS session, and thus determine whether to join any one or more MBS sessions created by the core network device based on the MBS session information.

In an embodiment, the MBS session ID may include at least one of: the TMGI, an SSM, MBS service area information, session description information, or access type information. In some optional embodiments, the access type information may also be RAT type information.

For example, the MBS session ID may include the access type information or the RAT type information. The access type information or the RAT type information may represent a trusted non-3GPP access mode.

It may be understood that the MBS session may be uniquely identified by the TMGI, or may be uniquely identified by the SSM, the MBS service area information, the session description information or the access type information.

In another embodiment, the MBS service area information includes at least one of: a cell ID, a TAI list, geographical area information, civic address information, or area information, in which the area information is recognizable by the access network device (e.g., a non-3GPP access network device) and mappable to an area covered by a non-3GPP access point. The area information may be an area information ID corresponding to the area information.

It may be understood that the cell ID, the TAI list, the geographical area information, the civic address information, and the area information may all be recognized as a certain geographical area by the access network device or the terminal. The MBS service area information may be represented by the cell ID, the TAI list, the geographical area information, the civic address information, or the area information. For example, the MBS session may be uniquely identified by an address or an area corresponding to the cell ID.

In a case that the MBS service area information includes an MBS service area corresponding to the non-3GPP access network, the MBS service area information may include the area information. The area information represents an area covered by the non-3GPP access network.

In embodiments of the disclosure, the application function network element sends the first request message including the MBS service area corresponding to the non-3GPP access network device to the first network element, to enable the first network element to allocate the TMGI to the MBS service area to identify the MBS service area corresponding to the non-3GPP access network device. Thus, the MBS session supporting the non-3GPP access network device is created, which enables the core network device to provide the MBS to the terminal accessed in the non-3GPP mode. Further, sending the MBS session ID to the terminal enables the terminal to determine information related to each MBS session based on the MBS session ID, and thus determine whether to join any one or more MBS sessions based on the MBS session information, so that the core network device may provide the MBS to the terminal accessed in the non-3GPP mode.

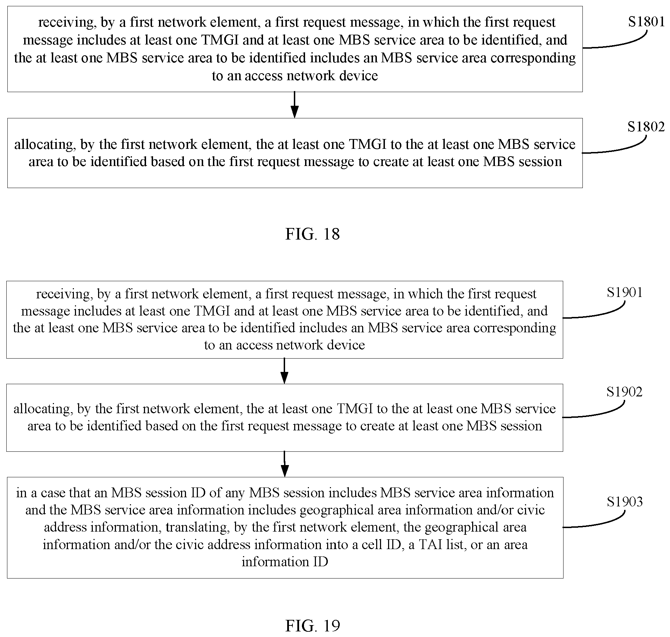

FIG. 18 is a flow chart illustrating a communication method according to an embodiment. The method is applied to a first network element in a core network device. The first network element is a network exposure function network element, an MBS function network element, or a network element integrating the network exposure function network element and the MBS function network element. As shown in FIG. 18, the method includes following steps S1801 to S1802.

At step S1801, the first network element receives a first request message, in which the first request message includes at least one TMGI and at least one MBS service area to be identified, and the at least one MBS service area to be identified includes an MBS service area corresponding to an access network device.

At step S1802, the first network element allocates the at least one TMGI to the at least one MBS service area to be identified based on the first request message to create at least one MBS session.

It may be understood that the first network element may allocate a TMGI to each MBS service area to be identified to create an MBS session. That is, each MBS session corresponds to only one MBS service area and one TMGI.

The MBS service area to be identified may include an MBS service area corresponding to a non-3GPP access network and/or an MBS service area corresponding to a 3GPP access network.

In embodiments of the disclosure, the first network element receives the first request message including the MBS service area corresponding to the trusted non-3GPP access network device from the application function network element, and allocates the TMGI to the MBS service area to identify the MBS service area corresponding to the non-3GPP access network device. Thus, the MBS session supporting the non-3GPP access network device is created, which enables the core network device to provide the MBS to the terminal accessed in the non-3GPP mode.

FIG. 19 is a flow chart illustrating a communication method according to an embodiment. The method is applied to a first network element in a core network device. The first network element is a network exposure function network element, an MBS function network element, or a network element integrating the network exposure function network element and the MBS function network element. As shown in FIG. 19, the method includes following steps S1901 to S1903.

At step S1901, the first network element receives a first request message, in which the first request message includes at least one TMGI and at least one MBS service area to be identified, and the at least one MBS service area to be identified includes an MBS service area corresponding to an access network device.

At step S1902, the first network element allocates the at least one TMGI to the at least one MBS service area to be identified based on the first request message to create at least one MBS session.

At step S1903, in a case that an MBS session ID of any MBS session includes MBS service area information and the MBS service area information includes geographical area information and/or civic address information, the first network element translates the geographical area information and/or the civic address information into a cell ID, a TAI list, or an area information ID.

In an embodiment, the MBS session ID may include at least one of: the TMGI, an SSM, MBS service area information, session description information, or access type information. In some optional embodiments, the access type information may also be RAT type information.

For example, the MBS session ID may include the access type information or the RAT type information. The access type information or the RAT type information may represent a trusted non-3GPP access mode.

In another embodiment, the MBS service area information includes at least one of: a cell ID, a TAI list, geographical area information, civic address information, or area information, in which the area information is recognizable by the access network device and mappable to an area covered by a non-3GPP access point. The area information may be an area information ID corresponding to the area information.

In another embodiment, the MBS service area information includes at least one of: a cell ID, a TAI list, geographical area information, civic address information, or area information, in which the area information is recognizable by the access network device (e.g., a non-3GPP access network device) and mappable to an area covered by a non-3GPP access point. The area information may be an area information ID corresponding to the area information.

It may be understood that the cell ID, the TAI list, the geographical area information, the civic address information, and the area information may all be recognized as a certain geographical area by the access network device or the terminal. The MBS service area information may be represented by the cell ID, the TAI list, the geographical area information, the civic address information, or the area information. For example, the MBS session may be uniquely identified by an address or an area corresponding to the cell ID.

An amount of data corresponding to the cell ID, or the TAI list, or the area information ID is less than an amount of data corresponding to the geographic area information and/or the civic address information.

In an embodiment, after step S1903, the core network device may send the translated MBS service area information to the terminal via the application function network element.

In embodiments of the disclosure, the first network element receives the first request message including the MBS service area corresponding to the trusted non-3GPP access network device from the application function network element, and allocates the TMGI to the MBS service area to identify the MBS service area corresponding to the non-3GPP access network device. Thus, the MBS session supporting the non-3GPP access network device is created. In the case that the MBS session is identified by the MBS service area information, and the MBS service area information is represented by the geographic area information and/or the citizen address information, the first network element may translate the geographic area information and/or the citizen address information into the cell ID, the TAI list, or the area information ID with lower amount of data, which enables the core network device to provide the MBS to the terminal accessed in the non-3GPP mode and also effectively reduce the amount of data transmitted.

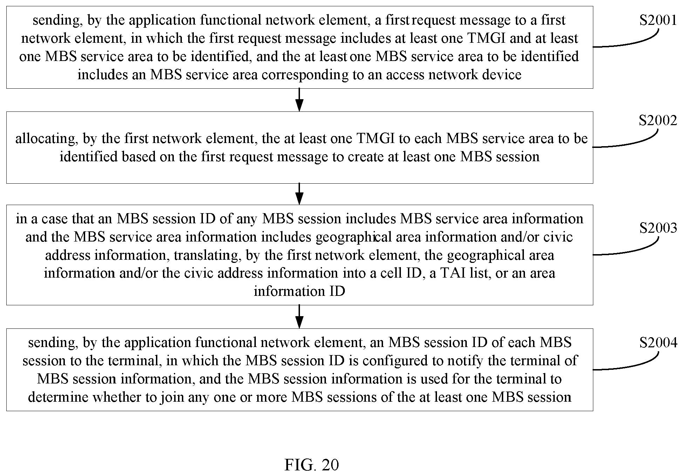

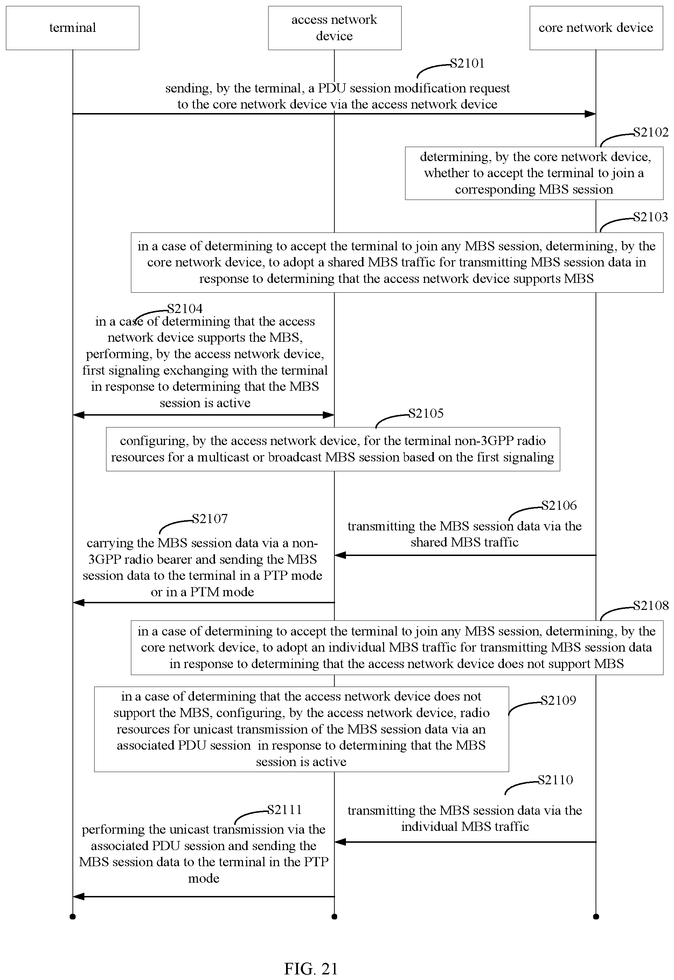

In order to enable those skilled in the art to better understand the technical solutions provided in the disclosure, the disclosure also provides the following embodiments as shown in FIG. 20 and FIG. 21.

FIG. 20 is a flow chart illustrating a communication method according to an embodiment. The method is applied to a core network device. The core network device includes an application function network element and a first network element. The first network element is a network exposure function network element, an MBS function network element, or a network element integrating the network exposure function network element and the MBS function network element. As shown in FIG. 20, the method includes following steps S2001 to S2004.

At step S2001, the application functional network element sends a first request message to the first network element, in which the first request message includes at least one TMGI and at least one MBS service area to be identified, and the at least one MBS service area to be identified includes an MBS service area corresponding to an access network device.

At step S2002, the first network element allocates the at least one TMGI to each MBS service area to be identified based on the first request message to create at least one MBS session.

At step S2003, in a case that an MBS session ID of any MBS session includes MBS service area information and the MBS service area information includes geographical area information and/or civic address information, the first network element translates the geographical area information and/or the civic address information into a cell ID, a TAI list, or an area information ID.

At step S2004, the application function network element sends an MBS session ID of each MBS session to the terminal, in which the MBS session ID is configured to notify the terminal of MBS session information, and the MBS session information is used for the terminal to determine whether to join any one or more MBS sessions of the at least one MBS session.

The access network device is a trusted non-3GPP access network device and the terminal communicates with the core network device in a non-3GPP mode via the trusted non-3GPP access network device.

In the step S2004, the application function network element sending the MBS session ID of each MBS session to the terminal may refer to sending the MBS session ID translated by the first network element to the terminal.

In an embodiment, the MBS session ID may include at least one of: the TMGI, an SSM, MBS service area information, session description information, or access type information. In some optional embodiments, the access type information may also be RAT type information.

For example, the MBS session ID may include the access type information or the RAT type information. The access type information or the RAT type information may represent a trusted non-3GPP access mode.

In another embodiment, the MBS service area information includes at least one of: a cell ID, a TAI list, geographical area information, civic address information, or area information, in which the area information is recognizable by the access network device and mappable to an area covered by a non-3GPP access point. The area information may be an area information ID corresponding to the area information.

In another embodiment, the MBS service area information includes at least one of: a cell ID, a TAI list, geographical area information, civic address information, or area information, in which the area information is recognizable by the access network device (e.g., a non-3GPP access network device) and mappable to an area covered by a non-3GPP access point. The area information may be an area information ID corresponding to the area information.

It may be understood that the cell ID, the TAI list, the geographical area information, the civic address information, and the area information may all be recognized as a certain geographical area by the access network device or the terminal. The MBS service area information may be represented by the cell ID, the TAI list, the geographical area information, the civic address information, or the area information. For example, the MBS session may be uniquely identified by an address or an area corresponding to the cell ID.

An amount of data corresponding to the cell ID, or the TAI list, or the area information ID is less than an amount of data corresponding to the geographic area information and/or the civic address information.

In embodiments of the disclosure, the core network device sends the first request message including the MBS service area corresponding to the trusted non-3GPP access network device to the first network element via the application function network element, and allocates the TMGI to the MBS service area to identify the MBS service area corresponding to the non-3GPP access network device. Thus, the MBS session supporting the non-3GPP access network device is created. In the case that the MBS session is identified by the MBS service area information, and the MBS service area information is represented by the geographic area information and/or the citizen address information, the first network element may translate the geographic area information and/or the citizen address information into the cell ID, the TAI list, or the area information ID with lower amount of data, which enables the core network device to provide the MBS to the terminal accessed in the non-3GPP mode and also effectively reduce the amount of data transmitted.

FIG. 21 is a schematic diagram illustrating an interaction of a communication method according to an embodiment. As shown in FIG. 21, the method includes following steps S2101 to S2111.

At step S2101, a terminal sends a PDU session modification request to a core network device via an access network device.

At step S2102, the core network device determines whether to accept the terminal to join a corresponding MBS session.

At step S2103, in a case of determining to accept the terminal to join any MBS session, the core network device determines to adopt a shared MBS traffic for transmitting MBS session data in response to determining that the access network device supports MBS.

At step S2104, in a case of determining that the access network device supports the MBS, the access network device performs first signaling exchanging with the terminal in response to determining that the MBS session is active.

At step S2105, the access network device configures for the terminal non-3GPP radio resources for a multicast or broadcast MBS session based on the first signaling.

At step S2106, the core network device transmits the MBS session data to the access network device via the shared MBS traffic.

At step S2107, the access network device carries the MBS session data via a non-3GPP radio bearer and sends the MBS session data to the terminal in a PTP mode or in a PTM mode.

At step S2108, in a case of determining to accept the terminal to join any MBS session, the core network device determines to adopt an individual MBS traffic for transmitting the MBS session data in response to determining that the access network device does not support MBS.

At step S2109, in a case of determining that the access network device does not support the MBS, the access network device configures radio resources for unicast transmission of the MBS session data via an associated PDU session in response to determining that the MBS session is active.

At step S2110, the core network device transmits the MBS session data to the access network device via the individual MBS traffic.

At step S2111, the access network device performs the unicast transmission via the associated PDU session and sends the MBS session data to the terminal in the PTP mode.

The access network device is a trusted non-3GPP access network device, and the terminal communicates with the core network device via the trusted non-3GPP access network device in a non-3GPP mode.

It should be noted that the steps S2103 to S2107, and steps S2108 to S2111 described above may be selectively implemented, i.e., corresponding to different types of non-3GPP access network devices, the communication system may perform the steps S2103 to S2107 or perform the steps S2108 to S2111.

In an embodiment, the trusted non-3GPP access network device includes a TNAP, and the TNAP is provided by a trusted non-3GPP satellite or a wireless router.

It should be noted that the wireless router may be any device that provides a wireless access point for a wireless local area network, such as a wireless gateway, a wireless bridge, and etc.

In addition, a satellite, as a specific implementation of the trusted non-3GPP access network, may be used as a TNAP to provide wireless access services for the terminal. Accordingly, in the case that the TNAP is provided by a trusted non-3GPP satellite, the trusted non-3GPP access device may also include an S-AGF. The S-AGF is equivalent to a TNGF in the trusted non-3GPP access network. The satellite may be used as the TNAP to communicate with a Ta interface of the S-AGF. The S-AGF may communicate with the AMF via an N2 interface. This N2 interface may be an enhanced N2 interface so that the S-AGF and the AMF may communicate reliably.

In particular, the PDU session modification request may be sent by the terminal via an uplink NAS message, and forwarded to the core network device via the access network device. The PDU session modification request may include one or more MBS session IDs, and the disclosure does not limit the number of MBS session IDs.

In some possible implementations, determining by the core network device whether to accept the terminal to join the MBS session may specifically be performed by an SMF network element in the core network device. The SMF network element may determine whether to accept the terminal to join the MBS session based on MBS subscription data received from a UDM network element and/or based on a terminal indication received from an MB-SMF network element. If the MBS session that the terminal requests to join is not enabled, the SMF may accept the terminal to join the MBS session and indicate an enabled time to the terminal, or the SMF may refuse the terminal to join the MBS session. If the MBS session that the terminal requests to join is inactive, the SMF may accept the terminal to join the MBS session.

In some optional embodiments, in the case that the SMF accepts the terminal to join the MBS session, the SMF may send an N2 information request to the access network device. The N2 information request may include one or more of: a PDU session ID, an MBS session ID, updated PDU session information, and mapping information between a unicast QoS flow and a multicast QoS flow. If the MBS session does not exist in the trusted non-3GPP access network, the SMF may create an MBS session context for the MBS session in the trusted non-3GPP access network. And the SMF may inform the trusted non-3GPP access network of a relationship between a multicast MBS session context and a PDU session context of the terminal based on the MBS session ID and the mapping information between the unicast QoS flow and the multicast QoS flow.

In an optional embodiment, the access network device may send a PDU session modification response to the core network device. The PDU session modification response may be carried by an N2 information response. The PDU session modification response may indicate to the core network device whether the access network device supports the MBS or not. In the case that the access network device does not support the MBS, a unicast QoS flow received by the access network device may be indicated to the core network device.

In an embodiment, the MBS session data sent by the core network device may be the MBS session data sent adopting a shared MBS traffic. In particular, an MB-UPF sends a multicast PDU to the access network device via an N3mb interface corresponding to the MBS session, so that all the terminals joining the MBS session via the access network device share the interface for receiving the MBS session data.

In an embodiment, the access network device may determine to use the PTP mode or the PTM mode based on the MBS session data. If the MBS session data is unicast data, the data may be sent to the corresponding terminal in the PTP mode. If the MBS session data is multicast data or broadcast data, the data may be sent to the corresponding one or more terminals in the PTM mode.

In an optional embodiment, the access network device may send a PDU session modification response to the core network device. The PDU session modification response may be carried by an N2 information response. The PDU session modification response may indicate to the core network device whether the access network device supports the MBS or not. In the case that the access network device does not support the MBS, a unicast QoS flow received by the access network device may be indicated to the core network device.

In an embodiment, the MBS session data sent by the core network device may be sent adopting an individual MBS traffic. In particular, an MB-UPF sends a multicast PDU to a UPF via an N19mb interface corresponding to the MBS session. Each MBS session has only one interface with the corresponding UPF, i.e., all PDU sessions provided by each UPF share the interface, so that the UPF forwards multicast MBS session data to the access network device in a unicast mode, and the access network device forwards the MBS session data to the terminal in a unicast mode. The MBS session data is transmitted through a radio bearer corresponding to an associated QoS flow of an associated PDU session, i.e., the MBS session data is sent to the access network device via the PDU session, and the MBS session data is forwarded to the terminal by the access network device. The associated QoS flow may be carried by the N2 information request described above.

In an embodiment, the access network device sending the MBS session data to the terminal in the PTP mode may refer to sending multicast or broadcast MBS session data to the terminals that join the MBS session via the access network device respectively via the PDU session.

In embodiments of the disclosure, the trusted non-3GPP access network device enables the core network device to determine whether to accept the terminal to join the MBS session by forwarding the PDU session modification request sent by the terminal to the core network device, and after the terminal is accepted to join the MBS session, the access network device performs the unicast transmission via the associated PDU session when the MBS session is active, and sends the MBS session data to the terminal in the PTP mode or sends the MBS session data carried via a non-3GPP radio bearer to the terminal in the PTP mode or in the PTM mode, which ensures that the access network device may effectively transmit the MBS session data in the case of supporting or not supporting the MBS, and enables the core network device to provide the MBS to the terminal accessed in the non-3GPP mode.

Based on the same inventive concept, embodiments of the disclosure also provide the following communication apparatuses.

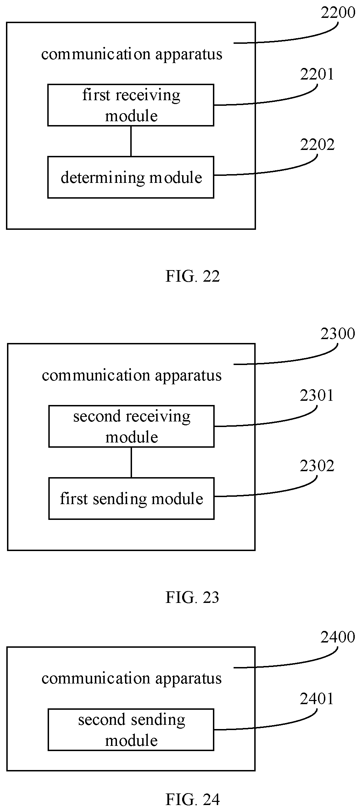

FIG. 22 is a block diagram illustrating a communication apparatus according to an embodiment. The communication apparatus 2200 is applied to a core network device. As shown in FIG. 22, the communication apparatus 2200 includes a first receiving module 2201 and a determining module 2202.

The first receiving module 2201 is configured to receive a PDU session modification request from an access network device, in which the PDU session modification request includes an MBS session ID, the MBS session ID represents an MBS session that a terminal requests to join.

The determining module 2202 is configured to determine whether to accept the terminal to join the MBS session.

The access network device is a trusted non-3GPP access network device and the terminal communicates with the core network device in a non-3GPP mode via the trusted non-3GPP access network device.

Optionally, the trusted non-3GPP access network device includes a TNAP, and the TNAP is provided by a trusted non-3GPP satellite or a wireless router.

Optionally, the core network device includes an application function network element and a first network element, and the first network element is a network exposure function network element, an MBS function network element, or a network element integrating the network exposure function network element and the MBS function network element.

Optionally, the communication apparatus 2200 is configured to send, by the application function network element, a first request message to the first network element, in which the first request message includes at least one TMGI and at least one MBS service area to be identified, and the at least one MBS service area to be identified includes an MBS service area corresponding to the access network device; and allocate, by the first network element, the at least one TMGI to each MBS service area to be identified based on the first request message to create at least one MBS session.

Optionally, the communication apparatus 2200 is configured to send, by the application function network element, an MBS session ID of each MBS session to the terminal, in which the MBS session ID is configured to notify the terminal of MBS session information, and the MBS session information is used for the terminal to determine whether to join any one or more MBS sessions of the at least one MBS session; the MBS session ID includes at least one of: the TMGI, an SSM, MBS service area information, session description information, or access type information; the MBS service area information includes at least one of: a cell ID, a TAI list, geographical area information, civic address information, or area information, in which the area information is recognizable by the access network device and mappable to an area covered by a non-3GPP access point.

Optionally, the communication apparatus 2200 is configured to, in a case that any MBS session ID includes the MBS service area information and the MBS service area information includes the geographical area information and/or the civic address information, translate, by the first network element, the geographical area information and/or the civic address information into the cell ID, the TAI list, or an area information ID.

Optionally, the communication apparatus 2200 includes a first determining module, configured to, in a case of determining to accept the terminal to join any MBS session, determine to adopt a shared MBS traffic for transmitting the MBS session data in response to determining that the access network device supports MBS.

Optionally, the communication apparatus 2200 includes a fourth sending module, configured to send the MBS session data to the access network device, in which the access network device is configured to carry the MBS session data via a non-3GPP radio bearer and send the MBS session data to the terminal in a PTP mode or in a PTM mode.

Optionally, the non-3GPP radio bearer is configured by the access network device for the MBS session based on a first signaling in response to determining that the access network device supports the MBS and the MBS session joined by the terminal is active; and the first signaling includes a PDU session modification command, obtained by exchanging between the access network device and the terminal.

Optionally, the communication apparatus 2200 includes a second determining module, configured to, in a case of determining to accept the terminal to join any MBS session, determine to adopt an individual MBS traffic for transmitting the MBS session data in response to determining that the access network device does not support MBS.

Optionally, the communication apparatus 2200 includes a fifth sending module, configured to send the MBS session data to the access network device, in which the access network device is configured to perform unicast transmission via an associated PDU session and send the MBS session data to the terminal in a PTP mode.

Optionally, the associated PDU session is configured by the access network device for the MBS session in response to determining that the access network device does not support the MBS and the MBS session joined by the terminal is active.

FIG. 23 is a block diagram illustrating a communication apparatus according to an embodiment. The communication apparatus 2300 is applied to an access network device. The access network device is a trusted non-3GPP access network device and a terminal communicates with a core network device in a non-3GPP mode via the trusted non-3GPP access network device.

The communication apparatus 2300 includes a second receiving module 2301 and a first sending module 2302.

The second receiving module 2301 is configured to receive a PDU session modification request from the terminal.

The first sending module 2302 is configured to send the PDU session modification request to the core network device, in which the PDU session modification request includes an MBS session ID, the MBS session ID represents an MBS session that the terminal requests to join, and the PDU session modification request is used for the core network device to determine whether to accept the terminal to join the MBS session.

Optionally, the trusted non-3GPP access network device includes a TNAP, and the TNAP is provided by a trusted non-3GPP satellite or a wireless router.

Optionally, the communication apparatus 2300 includes a configuration module, configured to, in a case of determining that the core network device accepts the terminal to join the MBS session, configure radio resources for the MBS session in response to determining that the MBS session is active.

Optionally, the configuration module is configured to, in a case that the access network device supports MBS, perform first signaling exchanging with the terminal, in which the first signaling is used for the access network device to configure for the terminal non-3GPP radio resources for a multicast or broadcast MBS session based on the first signaling; and the first signaling includes a PDU session modification command.

Optionally, the communication apparatus 2300 includes a fourth receiving module, configured to receive the MBS session data from the core network device, carry the MBS session data via a non-3GPP radio bearer, and send the MBS session data to the terminal in a PTP mode or in a PTM mode.

Optionally, the configuration module is configured to, in a case that the access network device does not support the MBS, configure the radio resources for unicast transmission of the MBS data via an associated PDU session.

Optionally, the communication apparatus 2300 includes a fifth receiving module, configured to receive the MBS session data from the core network device, perform the unicast transmission via the associated PDU session, and send the MBS session data to the terminal in the PTP mode.

FIG. 24 is a block diagram illustrating a communication apparatus according to an embodiment. The communication apparatus 2400 is applied to a terminal. The terminal communicates with a core network device via an access network device in a non-3GPP mode, and the access network device is a trusted non-3GPP access network device.

As shown in FIG. 24, the communication apparatus 2400 includes a second sending module 2401.

The second sending module 2401 is configured to send a PDU session modification request to the access network device, in which the access network device is configured to send the PDU session modification request to the core network device; the PDU session modification request includes an MBS session ID, the MBS session ID represents an MBS session that the terminal requests to join, and the PDU session modification request is used for the core network device to determine whether to accept the terminal to join the MBS session.

Optionally, the trusted non-3GPP access network device includes a TNAP, and the TNAP is provided by a trusted non-3GPP satellite or a wireless router.

Optionally, the communication apparatus 2400 includes an exchanging module, configured to perform first signaling exchanging with the access network device, in which the first signaling is used for the access network device to configure for the terminal non-3GPP radio resources for a multicast or broadcast MBS session based on the first signaling; and the first signaling includes a PDU session modification command.

Optionally, the communication apparatus 2400 includes a sixth receiving module, configured to receive MBS session data, in which the MBS session data is carried by the access network device via a non-3GPP radio bearer and sent in a PTP mode or in a PTM mode; or the MBS session data is sent by the access network device performing unicast transmission via an associated PDU session in a PTP mode.

Optionally, the non-3GPP radio bearer is configured by the access network device for the MBS session based on a first signaling in response to determining that the access network device supports MBS and the MBS session joined by the terminal is active; and the first signaling includes a PDU session modification command, obtained by exchanging between the access network device and the terminal.

Optionally, the associated PDU session is configured by the access network device for the MBS session in response to determining that the access network device does not support MBS and the MBS session joined by the terminal is active.

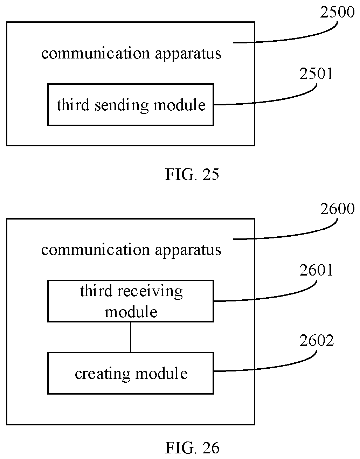

FIG. 25 is a block diagram illustrating a communication apparatus according to an embodiment. The communication apparatus 2500 is applied to an application function network element in a core network device. As shown in FIG. 25, the communication apparatus 2500 includes a third sending module 2501.

The third sending module 2501 is configured to send a first request message to a first network element, in which the first request message includes at least one TMGI and at least one MBS service area to be identified, and the at least one MBS service area to be identified includes an MBS service area corresponding to an access network device; the first network element is a network exposure function network element, an MBS function network element, or a network element integrating the network exposure function network element and the MBS function network element; the access network device is a trusted non-3GPP access network device and a terminal communicates with the core network device in a non-3GPP mode via the trusted non-3GPP access network device; and the first request message is used for the first network element to allocate the at least one TMGI to the at least one MBS service area to be identified based on the first request message to create at least one MBS session.

Optionally, the communication apparatus 2500 includes a sixth sending module, configured to send an MBS session ID of each MBS session to the terminal, in which the MBS session ID is configured to notify the terminal of MBS session information, and the MBS session information is used for the terminal to determine whether to join any one or more MBS sessions of the at least one MBS session; the MBS session ID includes at least one of: the TMGI, an SSM, MBS service area information, session description information, or access type information; the MBS service area information includes at least one of: a cell ID, a TAI list, geographical area information, civic address information, or area information, in which the area information is recognizable by the access network device and mappable to an area covered by a non-3GPP access point.

FIG. 26 is a block diagram illustrating a communication apparatus according to an embodiment. The communication apparatus 2600 is applied to a first network element in a core network device. The first network element is a network exposure function network element, an MBS function network element, or a network element integrating the network exposure function network element and the MBS function network element.

As shown in FIG. 26, the communication apparatus 2600 includes a third receiving module 2601 and a creating module 2602.

The third receiving module 2601 is configured to receive a first request message from an application function network element, in which the first request message includes at least one TMGI and at least one MBS service area to be identified, and the at least one MBS service area to be identified includes an MBS service area corresponding to an access network device, in which the access network device is a trusted non-3GPP access network device and a terminal communicates with the core network device in a non-3GPP mode via the trusted non-3GPP access network device.

The creating module 2602 is configured to allocate the at least one TMGI to the at least one MBS service area to be identified based on the first request message to create at least one MBS session.

Optionally, the communication apparatus 2600 includes a translating module, configured to, in a case that an MBS session ID of any MBS session includes MBS service area information and the MBS service area information includes geographical area information and/or civic address information, translate the geographical area information and/or the civic address information into a cell ID, a TAI list, or an area information ID.

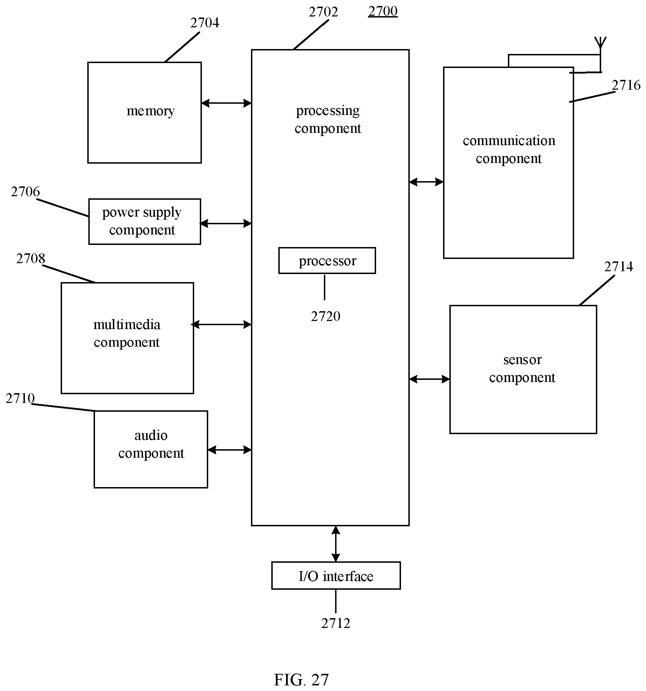

FIG. 27 is a block diagram illustrating an electronic device 2700 according to an embodiment. The electronic device 2700 may be provided as a terminal. For example, the electronic device 2700 may be a cell phone, a computer, a digital broadcasting terminal, a message transceiver device, a gaming console, a tablet device, a medical device, a fitness device, a personal digital assistant, etc.

Referring to FIG. 27, the electronic device 2700 may include one or more of the following components: a processing component 2702, a memory 2704, a power supply component 2706, a multimedia component 2708, an audio component 2710, an inputs/outputs interface (I/O) 2712, a sensor component 2714, and a communication component 2716.

The processing component 2702 generally controls the overall operation of the electronic device 2700, such as operations associated with displays, telephone calls, data communications, camera operations, and recording operations. The processing component 2702 can include one or more processors 820 to execute instructions to accomplish all or some of the steps of the method described above. Alternatively, the processing component 2702 may include one or more modules to facilitate interaction between the processing component 2702 and other components. For example, the processing component 2702 can include a multimedia module to facilitate interaction between the multimedia component 2708 and the processing component 2702.

The memory 2704 is configured to store various types of data to support operation at the device 2700. Examples of such data include instructions for any application or method operated on the electronic device 2700, contact data, phone book data, messages, pictures, videos, etc. The memory 2704 can be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, a disk or CD-ROM.

The power supply assembly 2706 provides power to the various components of the electronic device 2700. The power supply component 2706 can include a power management system, one or more power supplies, and other components associated with generating, managing, and distributing power for the electronic device 2700.

The multimedia component 2708 includes a screen providing an output interface between the electronic device 2700 and a user. In some embodiments, the screen can include a liquid crystal display (LCD) and a touch panel (TP). In case the screen includes a touch panel, the screen can be implemented as a touch screen to receive input signals from the user. The touch panel includes one or more touch sensors to sense touches, swipes, and gestures on the touch panel. The touch sensors can sense a boundary of a touch or swipe action, and detect a duration and pressure associated with the touch or swipe operation. In some embodiments, the multimedia component 2708 includes a front-facing camera and/or a rear-facing camera. The front camera and/or the rear camera may receive external multimedia data when the device 2700 is in an operating mode, such as a shooting mode or a video mode. Each front camera and rear camera can be a fixed optical lens system or have a focal length and optical zoom capability.

The audio component 2710 is configured to output and/or input audio signals. For example, the audio component 2710 includes a microphone (MIC) that is configured to receive external audio signals when the electronic device 2700 is in an operational mode, such as a call mode, a recording mode, and a voice recognition mode. The received audio signals can be further stored in the memory 2704 or sent in the communication component 2716. In some embodiments, the audio component 2710 further includes a speaker for outputting audio signals.

The I/ O interface 2712 provides an interface between the processing component 2702 and a peripheral interface module, the peripheral interface module can be a keypad, click wheel, buttons, etc. These buttons can include, but are not limited to: a home button, a volume button, a start button, and a lock button.

The sensor assembly 2714 includes one or more sensors for providing various aspects of status assessment for the electronic device 2700. For example, the sensor assembly 2714 may detect an open/closed state of the device 2700, the relative positioning of components, such as the components being the display and keypad of the electronic device 2700, the sensor assembly 2714 may also detect a change in the position of the electronic device 2700 or one of the components of the electronic device 2700, the presence or absence of user contact with the electronic device 2700, the orientation of the electronic device 2700 or acceleration/deceleration of the electronic device 2700, and the electronic device 2700's temperature change. The sensor assembly 2714 can include a proximity sensor configured to detect the presence of a nearby object in the absence of any physical contact. The sensor assembly 2714 can also include an optical sensor, such as a CMOS or CCD image sensor, for use in imaging applications. In some embodiments, the sensor assembly 2714 can also include an acceleration sensor, a gyroscope sensor, a magnetic sensor, a pressure sensor, or a temperature sensor.

The communication component 2716 is configured to facilitate communication between the electronic device 2700 and other devices by wired or wireless means. The electronic device 2700 can access a wireless network based on a communication standard, such as Wi-Fi, 2G or 3G, or a combination thereof. In an exemplary embodiment, the communication component 2716 receives broadcast signals or broadcast-related information from an external broadcast management system in a broadcast channel. In an exemplary embodiment, the communication component 2716 further includes a near field communication (NFC) module to facilitate short-range communication. For example, in the NFC module can be implemented based on radio frequency identification (RFID) technology, infrared data association (IrDA) technology, ultra wide band (UWB) technology, Bluetooth (BT) technology, and other technologies.

In exemplary embodiments, the electronic device 2700 can be implemented by one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, or other electronic components for performing the methods described above.

In an embodiment, there is also provided a non-transitory computer-readable storage medium including instructions, such as a memory 2704 including instructions, the instructions being executable by a processor 820 of the electronic device 2700 for accomplishing the above-described method. For example, the non-transitory computer-readable storage medium can be ROM, random access memory (RAM), CD-ROM, magnetic tape, floppy disks, and optical data storage devices, etc.

In another embodiment, there is also provided a computer program product. The computer program product includes a computer program executable by a programmable device. The computer program has a code portion for performing the communication method described above when executed by the programmable device.

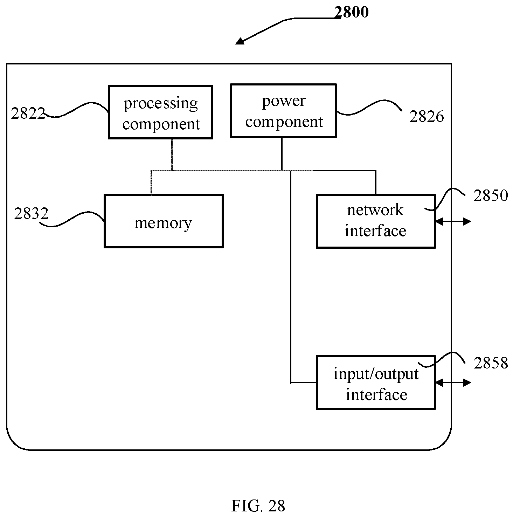

FIG. 28 is a block diagram illustrating an electronic device according to an embodiment. For example, the electronic device 2800 may be provided as a network logical entity in a core network or an access network. Referring to FIG. 28, the electronic device 2800 includes a processing component 2822, which further includes one or more processors, and a memory resource represented by a memory 2832 for storing instructions that can be executed by the processing component 2822, such as an application program. The application program stored in memory 2832 can include one or more modules each corresponding to a set of instructions. Alternatively, the processing component 2822 is configured to execute the instructions to perform steps of the communication method provided in the above method embodiments.

The electronic device 2800 may also include a power component 2826 configured to perform power management of the electronic device 2800, a wired or wireless network interface 2850 configured to connect the electronic device 2800 to a network, and an input/output (I/O) interface 2858. The electronic device 2800 can operate an operating system based on the operating system stored in the memory 2832, such as Windows Server^{™}, Mac OS X^{™}, Unix^{™}, Linux^{™}, FreeBSD^{™}, or the like.

In another embodiment, there is also provided a computer program product. The computer program product includes a computer program executable by a programmable device. The computer program has a code portion for performing the communication method described above when executed by the programmable device.

Other implementations of the embodiments of the disclosure will be readily apparent to those skilled in the art from consideration of the specification and practice of the disclosure disclosed herein. This application is intended to cover any modification, use or adaptation of the embodiments of the disclosure, these modifications, uses or adaptations follow the general principles of the embodiments of the disclosure and include those in the technical field not disclosed by the embodiments of the disclosure Common knowledge or common technical means. The specification and examples are to be considered exemplary only, with a true scope and spirit of the embodiments of the disclosure being indicated by the following claims.

It should be understood that the embodiments of the disclosure are not limited to the precise structures described above and shown in the drawings, and various modifications and changes can be made without departing from the scope thereof. The scope of embodiments of the disclosure is limited only by the appended claims.

## Claims

1. A communication method, applied to a core network device, comprising:
receiving a packet data unit (PDU) session modification request from an access network device, wherein the PDU session modification request comprises a multicast and broadcast service (MBS) session identification (ID), the MBS session ID represents an MBS session that a terminal requests to join; and
determining whether to accept the terminal to join the MBS session;
wherein the access network device is a trusted non-3rd generation partnership project (3GPP) access network device and the terminal communicates with the core network device in a non-3GPP mode via the trusted non-3GPP access network device.

2. The method of claim 2, wherein the trusted non-3GPP access network device comprises a trusted non-3GPP access point (TNAP), and the TNAP is provided by a trusted non-3GPP satellite or a wireless router.

3. The method of claim 1 or 2, wherein the core network device comprises an application function network element and a first network element, and the first network element is a network exposure function network element, an MBS function network element, or a network element integrating the network exposure function network element and the MBS function network element;
the method comprises:
sending, by the application function network element, a first request message to the first network element, wherein the first request message comprises at least one temporary mobile group identity (TMGI) and at least one MBS service area to be identified, and the at least one MBS service area to be identified comprises an MBS service area corresponding to the access network device; and
allocating, by the first network element, the at least one TMGI to each MBS service area to be identified based on the first request message to create at least one MBS session.

4. The method of claim 3, further comprising:
sending, by the application function network element, an MBS session ID of each MBS session to the terminal, wherein the MBS session ID is configured to notify the terminal of MBS session information, and the MBS session information is used for the terminal to determine whether to join any one or more MBS sessions of the at least one MBS session;
the MBS session ID comprises at least one of: the TMGI, a synchronization status message (SSM), MBS service area information, session description information, or access type information;
the MBS service area information comprises at least one of: a cell ID, a tracking area indicator (TAI) list, geographical area information, civic address information, or area information, wherein the area information is recognizable by the access network device and mappable to an area covered by a non-3GPP access point.

5. The method of claim 4, further comprising:
in a case that any MBS session ID comprises the MBS service area information and the MBS service area information comprises the geographical area information and/or the civic address information, translating the geographical area information and/or the civic address information into the cell ID, the TAI list, or an area information ID via the first network element.

6. The method of claim 1 or 2, further comprising:
in a case of determining to accept the terminal to join any MBS session, determining to adopt a shared MBS traffic for transmitting MBS session data in response to determining that the access network device supports MBS.

7. The method of claim 6, further comprising:
sending the MBS session data to the access network device, wherein the access network device is configured to carry the MBS session data via a non-3GPP radio bearer and send the MBS session data to the terminal in a point to point (PTP) mode or in a point to multipoint (PTM) mode.

8. The method of claim 7, wherein the non-3GPP radio bearer is configured by the access network device for the MBS session based on a first signaling in response to determining that the access network device supports the MBS and the MBS session joined by the terminal is active; and the first signaling comprises a PDU session modification command, obtained by exchanging between the access network device and the terminal.

9. The method of claim 1 or 2, further comprising:
in a case of determining to accept the terminal to join any MBS session, determining to adopt an individual MBS traffic for transmitting MBS session data in response to determining that the access network device does not support MBS.

10. The method of claim 8, further comprising:
sending the MBS session data to the access network device, wherein the access network device is configured to perform unicast transmission via an associated PDU session and send the MBS session data to the terminal in a PTP mode.

11. The method of claim 10, wherein the associated PDU session is configured by the access network device for the MBS session in response to determining that the access network device does not support the MBS and the MBS session joined by the terminal is active.

12. A communication method, applied to a terminal, wherein the terminal communicates with a core network device via an access network device in a non-3rd generation partnership project (3GPP) mode, and the access network device is a trusted non-3GPP access network device;
the method comprises:
sending a packet data unit (PDU) session modification request to the access network device, wherein the access network device is configured to send the PDU session modification request to the core network device;
wherein the PDU session modification request comprises a multicast and broadcast service (MBS) session identification (ID), the MBS session ID represents an MBS session that the terminal requests to join, and the PDU session modification request is used for the core network device to determine whether to accept the terminal to join the MBS session.

13. The method of claim 12, wherein the trusted non-3GPP access network device comprises a trusted non-3GPP access point (TNAP), and the TNAP is provided by a trusted non-3GPP satellite or a wireless router.

14. The method of claim 12 or 13, further comprising:
performing first signaling exchanging with the access network device, wherein the first signaling is used for the access network device to configure for the terminal non-3GPP radio resources for a multicast or broadcast MBS session based on the first signaling; and the first signaling comprises a PDU session modification command.

15. The method of claim 12 or 13, further comprising:
receiving MBS session data,
wherein the MBS session data is carried by the access network device via a non-3GPP radio bearer and sent in a point to point (PTP) mode or in a point to multipoint (PTM) mode; or
the MBS session data is sent by the access network device performing unicast transmission via an associated PDU session in a PTP mode.

16. The method of claim 15, wherein the non-3GPP radio bearer is configured by the access network device for the MBS session based on a first signaling in response to determining that the access network device supports MBS and the MBS session joined by the terminal is active; and the first signaling comprises a PDU session modification command, obtained by exchanging between the access network device and the terminal.

17. The method of claim 15, wherein the associated PDU session is configured by the access network device for the MBS session in response to determining that the access network device does not support MBS and the MBS session joined by the terminal is active.

18. A communication method, applied to an application function network element in a core network device, comprising:
sending a first request message to a first network element, wherein the first request message comprises at least one temporary mobile group identity (TMGI) and at least one multicast and broadcast service (MBS) service area to be identified, and the at least one MBS service area to be identified comprises an MBS service area corresponding to an access network device;
wherein the first network element is a network exposure function network element, an MBS function network element, or a network element integrating the network exposure function network element and the MBS function network element; the access network device is a trusted non-3rd generation partnership project (3GPP) access network device and a terminal communicates with the core network device in a non-3GPP mode via the trusted non-3GPP access network device; and the first request message is used for the first network element to allocate the at least one TMGI to the at least one MBS service area to be identified based on the first request message to create at least one MBS session.

19. The method of claim 18, further comprising:
sending an MBS session ID of each MBS session to the terminal, wherein the MBS session ID is configured to notify the terminal of MBS session information, and the MBS session information is used for the terminal to determine whether to join any one or more MBS sessions of the at least one MBS session;
the MBS session ID comprises at least one of: the TMGI, a synchronization status message (SSM), MBS service area information, session description information, or access type information;
the MBS service area information comprises at least one of: a cell ID, a tracking area indicator (TAI) list, geographical area information, civic address information, or area information, wherein the area information is recognizable by the access network device and mappable to an area covered by a non-3GPP access point.

20. A communication method, applied to a first network element in a core network device, wherein the first network element is a network exposure function network element, a multicast and broadcast service (MBS) function network element, or a network element integrating the network exposure function network element and the MBS function network element;
the method comprises:
receiving a first request message from an application function network element, wherein the first request message comprises at least one temporary mobile group identity (TMGI) and at least one MBS service area to be identified, and the at least one MBS service area to be identified comprises an MBS service area corresponding to an access network device, the access network device is a trusted non-3rd generation partnership project (3GPP) access network device and a terminal communicates with the core network device in a non-3GPP mode via the trusted non-3GPP access network device; and
allocating the at least one TMGI to the at least one MBS service area to be identified based on the first request message to create at least one MBS session.

21. The method of claim 20, further comprising:
in a case that any MBS session ID comprises MBS service area information and the MBS service area information comprises geographical area information and/or civic address information, translating the geographical area information and/or the civic address information into a cell ID, a tracking area indicator (TAI) list, or an area information ID.

22. A communication apparatus, applied to a core network device, comprising:
a first receiving module, configured to receive a packet data unit (PDU) session modification request from an access network device, wherein the PDU session modification request comprises a multicast and broadcast service (MBS) session identification (ID), the MBS session ID represents an MBS session that a terminal requests to join; and
a determining module, configured to determine whether to accept the terminal to join the MBS session;
wherein the access network device is a trusted non-3rd generation partnership project (3GPP) access network device and the terminal communicates with the core network device in a non-3GPP mode via the trusted non-3GPP access network device.

23. A communication apparatus, applied to a terminal, wherein the terminal communicates with a core network device via an access network device in a non-3rd generation partnership project (3GPP) mode, and the access network device is a trusted non-3GPP access network device; the apparatus comprises:
a second sending module, configured to send a packet data unit (PDU) session modification request to the access network device, wherein the access network device is configured to send the PDU session modification request to the core network device;
wherein the PDU session modification request comprises a multicast and broadcast service (MBS) session identification (ID), the MBS session ID represents an MBS session that the terminal requests to join, and the PDU session modification request is used for the core network device to determine whether to accept the terminal to join the MBS session.

24. A communication apparatus, applied to an application function network element in a core network device, comprising:
a third sending module, configured to send a first request message to a first network element, wherein the first request message comprises at least one temporary mobile group identity (TMGI) and at least one multicast and broadcast service (MBS) service area to be identified, and the at least one MBS service area to be identified comprises an MBS service area corresponding to an access network device;
wherein the first network element is a network exposure function network element, an MBS function network element, or a network element integrating the network exposure function network element and the MBS function network element; the access network device is a trusted non-3rd generation partnership project (3GPP) access network device and a terminal communicates with the core network device in a non-3GPP mode via the trusted non-3GPP access network device; and the first request message is used for the first network element to allocate the at least one TMGI to the at least one MBS service area to be identified based on the first request message to create at least one MBS session.

25. A communication apparatus, applied to a first network element in a core network device, wherein the first network element is a network exposure function network element, a multicast and broadcast service (MBS) function network element, or a network element integrating the network exposure function network element and the MBS function network element;
the apparatus comprises:
a third receiving module, configured to receive a first request message from an application function network element, wherein the first request message comprises at least one temporary mobile group identity (TMGI) and at least one MBS service area to be identified, and the at least one MBS service area to be identified comprises an MBS service area corresponding to an access network device, wherein the access network device is a trusted non-3rd generation partnership project (3GPP) access network device and a terminal communicates with the core network device in a non-3GPP mode via the trusted non-3GPP access network device; and
a creating module, configured to allocate the at least one TMGI to the at least one MBS service area to be identified based on the first request message to create at least one MBS session.

26. An electronic device, comprising:
a processor;
a memory storing instructions executable by the processor;
wherein the processor is configured to perform steps of the method of any one of claims 1 to 11, or steps of the method of any one of claims 12 to 17, or steps of the method of any one of claims 18 to 19, or steps of the method of any one of claims 20 to 21.

27. A computer-readable storage medium, storing computer program instructions which, when executed by a processor, steps of the method of any one of claims 1 to 11, or steps of the method of any one of claims 12 to 17, or steps of the method of any one of claims 18 to 19, or steps of the method of any one of claims 20 to 21 are implemented.
